# EUROPÄISCHE PATENTSCHRIFT

(11) **EP 4 322 807 B1**
(45) Veröffentlichungstag und Bekanntmachung des Hinweises auf die Patenterteilung: **15.01.2025**
(21) Anmeldenummer: 22769152.4
(22) Anmeldetag: 24.08.2022
(51) Int. Cl.: A47J 31/06, A47J 31/44

(54) **PULVERHALTER FÜR EINE GETRÄNKEZUBEREITUNGSVORRICHTUNG**
POWDER HOLDER FOR A DRINKS PREPARATION DEVICE
COMPARTIMENT À POUDRE POUR DISPOSITIF DE PRÉPARATION DE BOISSONS

(30) Priorität: 06.04.2022 DE 102022108253
(43) Veröffentlichungstag der Anmeldung: 21.02.2024
(73) Patentinhaber: Eugster/Frismag AG, 8580 Amriswil (CH)
(72) Erfinder: RIESSBECK, Wolfgang, 8597 Landschlacht (CH); VAN DE LÖCHT, Hendrik, 8586 Riedt bei Erlen (CH); BRÜNTRUP, Thomas, 8225 Siblingen (CH)
(74) Vertreter: Patent- und Rechtsanwälte Behrmann Wagner PartG mbB
(86) Internationale Anmeldenummer: PCT/EP2022/073545
(87) Internationale Veröffentlichungsnummer: WO 2023/193936

(56) Entgegenhaltungen:
- EP-A1- 2 087 818
- WO-A2-2020/035735
- DE-A1- 19 832 063
- DE-U1- 202005 006 877

## Beschreibung

Die Erfindung betrifft einen Pulverhalter zur lösbaren Aufnahme in einer Getränkezubereitungsvorrichtung nach dem Oberbegriff des Anspruchs 1 und eine Getränkezubereitungsvorrichtung mit einem Pulverhalter nach Anspruch 22.

Im Stand der Technik sind Pulverhalter für Getränkezubereitungsvorrichtungen bekannt, welche Getränke aufbrühen, indem ein Getränkesubstrat, beispielweise Kaffeepulver, auf einem Sieb oder einem Pulverhalterboden des Pulverhalters angeordnet und dieser unter Ausbildung einer Brühkammer mit einem Brühkopf der Getränkezubereitungsvorrichtung verbunden und abgedichtet wird. Das Getränk wird zubereitet, indem von der Getränkezubereitungsvorrichtung Brühfluid, bevorzugt heißes Wasser, durch den Pulverhalter geleitet oder unter Druck gepresst wird. Um die Reinigung des Pulverhalters und die Entfernung des benutzten Kaffeepulvers zu vereinfachen, kann der Pulverhalter aus der Maschine entnommen werden.

Aus der Anmeldung DE 10 2021 133 074 A1 sind Getränkepulverhalter bekannt, welche die Anhebung des Brühkammerbodens an oder über den Rand der Brühkammerwand nach der Entnahme ermöglichen, damit das benutze Kaffeepulver einfach und schnell aus der Brühkammer entfernt werden kann. Dies ist durch eine Führungsschiene ermöglicht, welche bodenseitig integral mit der die Brühkammer bildenden Brühkammerwand verbunden ist. Der Brühkammerboden wird dabei durch punktuelle Auflage reibungsarm zwangsgeführt. Bei dieser Ausgestaltung ist es jedoch nachteilhaft, dass diese einen zusätzlichen bodenseitig angeordneten Hubraum benötigt und der Pulverhalter daher sehr groß ausgestaltet ist.

Weiter ist aus der Anmeldung EP 2 087 818 A1 ein Pulverhalter bekannt, welcher über die Verschiebung von zwei in einer Wellenform ausgestalteten und zueinander weisenden Kanten eine Höhenverstellung des Siebbodens erreicht, um das Brühkammervolumen bei Belieben zu halbieren. Aufgrund der Wellenform greifen die Kanten platzsparend ineinander, wenn der Brühkammerboden sich in der untersten Position befindet. Weiter ist eine zweite, ebenfalls wellenförmige Führungskante vorgesehen, an welcher der Brühkammerboden aus der Halbstellung weiter über den Rand der Brühkammer anhebbar ist, um das Entfernen von Kaffeesatz zu erleichtern. Die stufenweise Anhebung des Brühkammerbodens mittels der zweiten Führungen verursacht eine Reduzierung der Hubraumhöhe. Die Reduzierung ergibt sich daraus, dass die minimale Hubraumhöhe aus der Kantenhöhe der einzelnen Führungen vorgegeben ist, wobei sich die Kantenhöhe durch die zweistufige Ausgestaltung mit zwei Führungen auf die Hälfte reduziert ist. Damit die Kanten bei einer Rotation in entgegengesetzter Richtung in Kontakt bleiben, wird eine axiale Rückstellkraft über eine Feder auf die Kanten beaufschlagt. Jedoch entsteht aufgrund der flächigen Auflage der Kanten zueinander und durch die zusätzliche Krafteinwirkung der Feder Reibung, wodurch das Drehen des Pulverhalters erschwert wird.

Aus dem Gebrauchsmuster DE 20 2009 000 075 U1 ist eine entnehmbare Brüheinheit bekannt, welche entlang einer Längsachse verstellbar angetrieben wird. Der Antrieb erfolgt mittels einer Gewindespindel, die in einer an der Brüheinheit festgelegten Gewindehülse aufgenommen ist. Die Verstellung wird durch mindestens eine zusätzlich angeordnete Führung stabilisiert. DE 198 32 063 A1 offenbart ein weiteres Beispiel eines Pulverhalters zur lösbaren Aufnahme in einer Getränkezubereitungsvorrichtung, wobei der Pulverhalter ein Gehäuseelement, eine Brühkammerwand, ein Führungselement und einen in einer axialen Richtung beweglich gelagerten Brühkammerboden umfasst.

Weiter ist aus dem Gebrauchsmuster DE 20 2004 018 223 U1 eine Brühvorrichtung für Kaffeepadmaschinen bekannt, wobei die Brühvorrichtung einen oberen Teil und einem unteren Teil umfasst. Der obere Teil ist mittels einer Führung vertikal verstellbar gegenüber dem unteren Teil festgelegt und bildet mit diesem eine Brühkammer aus. Der obere Teil verfügt weiter über in Umfangs- und Axialrichtung verlaufende, schraubenförmig ausgestaltete Führungsstege, die eine in Umfangsrichtung ausgeführte Drehbewegung eines Betätigungsteils in die vertikale Verstellung des oberen Teils gegenüber des unteren Teils umsetzen. Der untere Teil umfasst eine in radialer Richtung entnehmbare Kassette, die das Kaffeepad aufnimmt und den unteren Teil der Brühkammer bildet.

Es besteht daher ein großer Bedarf an einem Pulverhalter, der die Entfernung eines Getränkesubstrats ermöglicht und erleichtert, und dabei sowohl platzsparend als auch leichtgängig ist. Die Handhabung des Pulverhalters soll dennoch möglichst einfach und intuitiv sein. Die Erfindung hat es sich zur Aufgabe gemacht einen solchen Pulverhalter bereitzustellen und gleichzeitig die im Stand der Technik aufgefundenen Nachteile zu überwinden.

Diese Aufgabe wird auf überraschend einfache, aber wirkungsvolle Weise von einem Pulverhalter nach Lehre des unabhängigen Hauptanspruchs 1 gelöst.

Erfindungsgemäß ist ein Pulverhalter zur lösbaren Aufnahme in einer Getränkezubereitungsvorrichtung, insbesondere eine Kaffee- oder Espressomaschine, vorgeschlagen, wobei der Pulverhalter ein Gehäuseelement, eine Brühkammerwand, ein Führungselement und einen in einer axialen Richtung beweglich gelagerten Brühkammerboden umfasst, wobei der Brühkammerboden an der Brühkammerwand dicht anliegenden und mit Siebmitteln zum Zurückhalten eines Getränkesubstrats, insbesondere Kaffeepulver, während eines Brühvorgangs ausgebildet ist.

Der Pulverhalter ist dadurch gekennzeichnet, dass das Führungselement als Übersetzungshülse ausgebildet ist und eine erste Führung an dem

Führungselement angeordnet ist, wobei der Brühkammerboden und die Brühkammerwand in der ersten Führung geführt sind, und wobei das Führungselement und die erste Führung so ausgeführt sind, dass eine Rotation des Gehäuseelements gegenüber der Brühkammerwand eine Axialverstellung des Führungselements gegenüber der Brühkammerwand und eine Axialverstellung des Brühkammerbodens gegenüber dem Führungselement bewirkt, so dass eine zweistufige, additive Axialverstellung des Brühkammerbodens gegenüber der Brühkammerwand zwischen einer obersten und einer untersten Position erfolgt.

Der Pulverhalter dient zur Aufnahme eines Getränkesubstrats, durch welches während eines Brühvorgangs heißes Brühfluid, bevorzugt heißes Wasser, geleitet oder unter Druck gepresst wird. Das heiße Brühfluid nimmt während des Brühvorgangs Stoffe, insbesondere Aromastoffe, aus dem Getränkesubstrat auf und dabei entsteht aus dem Brühfluid ein aromatisiertes Getränk. Damit der Pulverhalter das Getränkesubstrat und das Fluid während des Brühvorgangs aufnehmen kann, umfasst die Pulverhalter eine Brühkammer, welche durch die Brühkammerwand und den Brühkammerboden gebildet wird. Die Brühkammerwand ist hierfür in Umfangsrichtung geschlossen und in axialer Richtung beidseitig offen ausgestaltet. Die Brühkammerwand kann bevorzugt durch Extrusion entlang einer Normalen einer Fläche mit einer Ausnehmung ausgestaltet werden. Die Ausgestaltung der Fläche und der Ausnehmung ist grundsätzlich beliebig, bevorzugt ist die Fläche mit der Ausnehmung ein Kreisring und die Brühkammerwand ist demzufolge bevorzugt ein Hohlzylinder. Durch die obere Öffnung der Brühkammerwand wird vor dem Brühvorgang und/oder während des Brühvorgangs das heiße Brühfluid in die Brühkammer eingeleitet. Dies erfolgt in der Regel über einen Brühkopf der Getränkezubereitungsvorrichtung, an dem der Pulverhalter zum Ausführen eines Brühprozesses oder Brühvorgangs lösbar befestigt wird, bevorzugt über Bajonettverschlussmittel. Der Außenrand des Brühkammerbodens ist dabei nach der Form der Ausnehmung ausgestaltet, wodurch der Brühkammerboden dichtend an der Brühkammerwand anlegbar ist. Der Außenrand des Brühkammerbodens ist, mit anderen Worten ausgedrückt, der Ausgestaltung der Innenseite der Brühkammerwand nachgebildet. Der Brühkammerboden ist daher bevorzugt als Scheibe ausgebildet. Die Brühkammerwand und der Brühkammerboden bilden gemeinsam die Brühkammer. Der Brühkammerboden umfasst die Siebmittel, auf welchen das Getränkesubstrat innerhalb der Brühkammer platziert wird. Die Siebmittel sind derart ausgestaltet, dass das heiße Brühfluid, nachdem es das Getränkesubstrat in der Brühkammer während des Brühvorgangs passiert hat, durch die Siebmittel aus der Brühkammer als automatisiertes Getränk austreten kann. Dabei halten die Siebmittel das Getränkesubstrat zurück.

Damit nach dem Brühvorgang das Getränkesubstrat auf einfache Weise entfernt werden kann, ist der Brühkammerboden in einer axialen Richtung beweglich gelagert. Die Verstellbarkeit ist dabei in beide axialen Richtungen beschränkt, wobei die Beschränkung eine oberste und eine unterste Position definiert. Befindet sich der Brühkammerboden in der untersten Position, so weist die Brühkammer ein maximales Volumen auf. Diese untersten Position des Brühkammerbodens wird als "Brühposition" bezeichnet, da diese Position während des Brühvorgangs eingenommen werden soll. Ist der Brühkammerboden in axialer Richtung an der obersten Position, so befindet sich der Brühkammerboden in der "Ausstoßposition". Vorteilhafterweise kann gebrauchtes Getränkesubstrat in dieser Position auf dem Brühkammerboden über den oberen Rand der Brühkammerwand angehoben und so auf einfache Weise entfernt werden. Bevorzugt ist die Verstellung in axialer Richtung durch Ausmaße der Brühkammerwand beschränkt. Mit anderen Worten, wenn der Brühkammerboden in der Ausstoßposition ist, schließt der Brühkammerboden mit dem oberen Rand der Brühkammerwand plan ab, und wenn der Brühkammerboden in der Brühposition ist, so schließt der Brühkammerboden mit dem unteren Rand der Brühkammerwand plan ab. Noch mehr bevorzugt ist der Brühkammerboden vom unteren Rand der Brühkammerwand nach oben beabstandet und liegt dort dichtend an der Brühkammerwand an, wenn der Brühkammerboden sich in der Brühposition befindet. Hierdurch wird der Brühkammerboden in seiner Position stabilisiert und mögliche, fertigungstechnische Abweichungen ausgeglichen. Weiter ist bevorzugt denkbar, dass der Brühkammerboden in der Ausstoßposition vom oberen Rand der Brühkammerwand beabstandet ist und sich oberhalb der Brühkammer befindet, um mit einem denkbaren Abdeckungselement plan abzuschließen.

Um die axiale Verstellbarkeit des Brühkammerbodens zu ermöglichen, weist der Pulverhalter ein Führungselement auf. An dem Führungselement ist eine erste Führung angeordnet. Das Führungselement ist sowohl in Bezug auf die Brühkammerwand als auch in Bezug auf den Brühkammerboden axial verstellbar ausgestaltet. Sowohl die Axialverstellung des Führungselements gegenüber der Brühkammerwand als auch die Axialverstellung des Brühkammerbodens gegenüber dem Führungselements werden durch eine Rotation des Gehäuseelements gegenüber der Brühkammerwand und dem Brühkammerboden hervorgerufen. Die beiden Axialverstellungen verlaufen dabei stets in Bezug auf die Brühkammerwand in die gleiche Richtung, also entweder nach oben oder nach unten, sodass sich für den Brühkammerboden eine additive Axialverstellung in Bezug auf dir Brühkammerwand ergibt. Mit anderen Worten, das Führungselement beweget sich in Bezug auf die Brühkammerwand bei einer Drehung des Gehäuseelements in axialer Richtung mit dem Brühkammerboden nach oben bzw. nach unten und der Brühkammerboden bewegt sich in Bezug auf das Führungselement gleichzeitig ebenfalls in axialer Richtung nach oben bzw. nach unten, sodass der Brühkammerboden in Bezug auf die Brühkammerwand beide Axialverstellungen erfährt. Um dies zu ermöglichen sind sowohl der Brühkammerboden, als auch die Brühkammerwand in der ersten Führung geführt und das Führungselement ist als Übersetzungshülse ausgebildet. Dabei finden die Axialverstellungen stets gleichzeitig statt, um eine besonders schnelles und leichtgängiges Verstellen des Brühkammerbodens gegenüber der Brühkammerwand zu ermöglichen. Durch das Führen der Brühkammerwand und des Brühkammerbodens in derselben Führung ist es weiter möglich diese umgreifend auszugestalten. Das heißt, dass sich die Axialverstellung des Führungselements gegenüber der Brühkammerwand und die Axialverstellung des Brühkammerbodens gegenüber dem Führungselement in beide axiale Richtungen zwangsweise ergeben. Daher kann auf eine zusätzliche Kraftbeaufschlagung beispielweise durch eine Feder verzichtet werden, wodurch sich die verschiebungsbedingte Reibung in der ersten Führung deutlich reduziert und der Pulverhalter leichtgängig ist. Dieser Effekt wird weiter dadurch verstärkt, dass durch die umgreifende Zwangsführung in beide Richtungen eine flächige Auflage nicht mehr nötig ist und diese bevorzugt punktuell ausgestaltet ist.

Die Ausgestaltung des Führungselements als Hülse ermöglicht durch die hohle Ausgestaltung das Abfließen des aromatisierten Getränks aus der Brühkammer. Unter einer Hülse wird dabei ein Hohlzylinder verstanden. Dabei ist der Außenradius des Führungselements bevorzugt geringer als der Innenradius der Brühkammerwand und der Durchmesser des Brühkammerbodens. Auf diese Weise kann das Führungselement zumindest teilweise in den Innenraum der Brühkammerwand aufgenommen werden, wenn sich der Brühkammerboden in der obersten Position befindet, und dadurch die Axialverstellung an den Brühkammerboden übertragen.

Das Gehäuseelement umschließt das den Brühkammerboden, die Übersetzungshülse und die Brühkammerwand in radialer Richtung zumindest teilweise und ist dabei zur Ermöglichung der Rotation gegenüber dem Brühkammerboden und/oder der Brühkammerwand in Umfangsrichtung beweglich ausgestaltet.

Die lösbare Ausnahme des Siebträges wird dadurch ermöglicht, dass der Pulverhalter aus der Getränkezubereitungsvorrichtung entnehmbar ist. Entnehmbar bedeutet, dass der Pulverhalter konstruktionstechnisch in einer Art ausgestaltet ist, die die zerstörungsfreie räumliche Trennung des Siebträges von der Getränkezubereitungsvorrichtung ermöglicht. Insbesondere ist es ermöglicht, den Pulverhalter ohne die Hilfe von Werkzeugen von der Getränkezubereitungsvorrichtung räumlich zu trennen. Eine mögliche Ausgestaltung des entnehmbaren Pulverhalters ist ein Aufhängungselement am Pulverhalter, wobei das Aufhängungselement in eine passende Schiene der Getränkezubereitungsvorrichtung einführbar ist. Die lösbare Aufnahme ermöglicht es den Pulverhalter nach dem Brühvorgang aus der Getränkezubereitungsvorrichtung zu entnehmen, das benutzte Getränkesubstrat direkt zu entsorgen und den Pulverhalter auf schnelle und einfache Weise zu reinigen. Weiter vorteilhaft ist dabei, dass eine aufwendige Reinigung der gesamten Getränkezubereitungsvorrichtung von Verschmutzung durch benutztes und in der Getränkezubereitungsvorrichtung gesammeltes Getränkesubstrat unnötig wird.

Grundsätzlich ist es beliebig, welches Getränkesubstrat in dem Pulverhalter verwendet wird, bevorzugt ist das Getränkesubstrat Kaffeepulver.

Grundgedanke der Erfindung ist es, dass durch die zweistufige, additive Axialverstellung des Brühkammerbodens in Bezug zur Brühkammerwand das Gehäuseelement insgesamt kompakter ausgestaltet werden kann. Dies wird dadurch bewirkt, dass das Führungselement, die Brühkammerwand und der Brühkammerboden in der Weise eines Teleskopstabs ineinander und auseinander geschoben werden können. Dabei ist durch die gleichzeitige Führung des Brühkammerbodens und der Brühkammerwand in einer gemeinsamen ersten Führung die rotationsbedingte Zwangsführung in beide axiale Richtungen ermöglicht, was im Endeffekt die Reibung reduziert und zu einer leichtgängigen Verstellung führt.

Mittels der Erfindung ist es ermöglicht, einen leicht und intuitiv anwendbaren Pulverhalter bereit zu stellen, und welcher das Entfernen von Getränkesubstrat aus der Brühkammer auf schnelle und einfache Weise ermöglicht. Dabei ist der Pulverhalter kompakt und platzsparend ausgestaltet.

Vorteilhafte Weiterbildungen der Erfindung, welche einzeln oder in Kombination realisierbar sind, sind in den Unteransprüchen dargestellt.

In einer weitergehenden Ausgestaltung des Pulverhalters ist es vorteilhaft, dass die erste Führung durch eine in Umfangsrichtung geschlossene, bevorzugt kronenförmige erste Führungsbahn, mit abwechselnd angeordneten in axial Richtung geneigten erste Flanken ausgebildet ist, sodass eine Verschiebung von Führungselement und Brühkammerboden und von Führungselement und Brühkammerwand gleichzeitig in axialer Richtung und in Umfangsrichtung ermöglicht ist; dass eine zweite Führung zwischen Gehäuseelement und Führungselement ausgebildet ist, wobei die zweite Führung derart ausgebildet ist, dass eine Verschiebung von Gehäuseelement und Führungselement in axialer Richtung ermöglicht ist, dass eine dritte Führung zwischen Brühkammerboden und Brühkammerwand ausgebildet ist, wobei die dritte Führung derart ausgebildet ist, dass eine Verschiebung von Brühkammerwand und Brühkammerboden oder eine Verschiebung von Führungselement und Brühkammerboden in axialer Richtung ermöglicht ist, und/oder dass eine vierte Führung zwischen Gehäuseelement und Brühkammerwand ausgebildet ist, wobei die vierte Führung derart ausgebildet ist, dass die Rotation des Gehäuseelements, insbesondere die Rotation zwischen Gehäuseelement und Brühkammerwand, in Umfangsrichtung ermöglicht ist.

Die bevorzugte Ausgestaltung der ersten Führung bewirkt, dass die additive Axialverstellung besonders einfach dadurch herbeigeführt wird, dass der Brühkammerboden an einer oder mehreren der ersten Flanken hinaufgleitet bzw. herabgleitet während gleichzeitig die Brühkammerwand an einer oder mehreren anderen ersten Flanken hinabgleitet bzw. hinaufgleitet. Dies wird durch eine Rotation des Führungselements in Bezug auf die Brühkammerwand und den Brühkammerboden ermöglicht. Mit anderen Worten durch die geneigten ersten Flanken wird eine Übersetzung der Drehbewegung des Führungselement in gegenläufige Axialverstellungen der Brühkammerwand und des Brühkammerbodens an den in axialer Richtung geneigten ersten Flanken, welche von der ersten Führung umfasst sind, übersetzt. Die ersten Flanken sind in axialer Richtung geneigt ausgestaltet, indem bei der Ausgestaltung die einzelne erste Flanke grundsätzlich in Umfangsrichtung ausgerichtet ist und anschließend eine Verdrehung der Ausrichtung in axialer Richtung erfolgt ist. Anders ausgedrückt, folgen die ersten Flanken im Raum einem Abschnitt einer Helix-Form. Je größer dabei die Verdrehung der ersten Flanken in axialer Richtung ist, desto steiler sind die ersten Flanken ausgestaltet. Zur einfachen Bedienbarkeit ist es bevorzugt, dass die erste Führung die Übersetzung der Drehbewegung des Führungselements in die gegenläufigen Axialverstellungen von Brühkammerboden und Brühkammerwand unabhängig von der Drehrichtung ermöglicht. Daher folgt auf eine erste Flanke, welcher in eine Richtung verdreht ist, eine erste Flanke, welche entgegen dieser Richtung verdreht ist, sodass sich eine abwechselnde, kronenförmige Anordnung der ersten Flanken ergibt. Die erste Führung ist bevorzugt an der Außenseite des Führungselements angeordnet. Um ein für den Benutzer komfortables unbegrenzt fortsetzbares Drehen des Pulverhalters zu ermöglichen, ist die erste Führung in Umfangsrichtung geschlossen ausgestaltet.

Die bevorzugte Ausgestaltung der zweiten Führung bewirkt, dass das Führungselement im Gehäuseelement lediglich in axialer Richtung verstellbar ist. Das heißt, eine Rotation des Gehäuseelements wird ebenfalls auf das Führungselement übertragen. Dadurch ist die erfindungsgemäße Axialverstellung des Führungselements gegenüber der Brühkammerwand auch dann möglich, wenn die Brühkammerwand und das Gehäuseelement zueinander in axialer Richtung festgelegt sind. Die axiale Festlegung von Gehäuseelement und Brühkammerwand bewirkt, dass bei einer geschlossenen Ausgestaltung der Innenseite der Brühkammerwand und der Außenseite des Gehäuseelements in Verbindung mit dem dichtend an der Brühkammerwand anliegenden Brühkammerboden alle Führungen nicht durch den Benutzer des Pulverhalters berührt werden können. Dies schützt sowohl den Benutzer vor Einklemmungen, aber auch die Führungen selbst vor Beschädigung durch den Benutzer oder durch Verunreinigungen und trägt dadurch zu einer besseren Haltbarkeit bei.

Die bevorzugte Ausgestaltung der dritten Führung bewirkt eine Festlegung von Brühkammerboden und Brühkammerwand in Umfangsrichtung zueinander. Dadurch wird die Abdichtung verbessert und die Reibung zwischen Brühkammerboden und Brühkammerwand bei dem erfindungsgemäßen dichtenden Anliegen des Brühkammerbodens an der Brühkammerwand vermindert, weil die Relativbewegungen der Brühkammerwand und des Brühkammerbodens zueinander auf die erfindungsgemäße Axialverstellung zueinander beschränkt wird. Mit anderen Worten, durch die dritte Führung werden mit Ausnahme der erfindungsgemäßen Axialverstellung alle anderen und damit für den Erfindungsgedanken unnötigen Relativbewegungen von Brühkammerboden und Brühkammerwand unterbunden. Eine gute Abdichtung zwischen Brühkammerboden und Brühkammerwand schützt den Innenbereich vor Verschmutzung und eine geringe Reibung zwischen Brühkammerboden und Brühkammerwand ermöglicht eine leichtgängige Verstellung von Brühkammerboden und Brühkammerwand zueinander.

Die bevorzugte Ausgestaltung der vierten Führung bewirkt, eine axiale Festlegung von Brühkammerwand und Gehäuseelement. Die axiale Festlegung von Gehäuseelement und Brühkammerwand bewirkt, dass bei einer geschlossenen Ausgestaltung der Innenseite der Brühkammerwand und der Außenseite des Gehäuseelements in Verbindung mit dem dichtend an der Brühkammerwand anliegenden Brühkammerboden alle Führungen nicht durch den Benutzer des Pulverhalters berührt werden können. Dies schützt sowohl den Benutzer vor Einklemmungen, aber auch die Führungen selbst vor Beschädigung durch den Benutzer oder durch Verunreinigungen und trägt dadurch zu einer besseren Haltbarkeit bei. Dennoch ist die erfindungsgemäße Rotation des Gehäuseelements weiterhin möglich.

In einer bevorzugten Weiterbildung der ersten Führung ist die erste Führung als eine an die erste Führungsbahn angepasste erste Schiene und mindestens vier an die erste Schiene angepasste erste Tragprofile ausgebildet, wobei bevorzugt die erste Schiene am Führungselement und jeweils zwei der vier ersten Tragprofile am Brühkammerboden und jeweils zwei der vier ersten Tragprofile an der Brühkammerwand angeordnet sind. Durch die Anordnung der ersten Schiene am Führungselement und der Anordnung der ersten Tragprofile an Brühkammerwand und Brühkammerboden ist das gleichzeitige Führen des Brühkammerbodens und der Brühkammerwand ermöglicht. Dadurch, dass jeweils zwei der ersten Tragprofile an Brühkammerwand und Brühkammerboden angeordnet sind, ist ein Verkippen und ein durch das Verkippen begünstigtes Verkeilen von Brühkammerwand und Brühkammerboden unterbunden. Durch die an die erste Schiene angepassten ersten Tragprofile ist ein sicheres Führen gewährleistet.

Es ist vorteilhaft, dass das erste Tragprofil ein Kreiszylinder oder ein elliptischer Zylinder, insbesondere ein gerader Kreiszylinder oder ein gerader elliptischer Zylinder, ist. Grundsätzlich ist die Ausgestaltung des ersten Tragprofils beliebig, ein Tragprofil, welches ein Kreiszylinder oder ein elliptischer Zylinder ist, ist jedoch fertigungstechnisch einfach herstellbar und hat den Vorteil, dass ein Verkanten und/oder Verkeilen auch in der ersten Führung auch bei einem durch die ersten Flanken bedingten Richtungswechsel unwahrscheinlich ist. Außerdem wird hierdurch die Auflagefläche und damit auch der Reibungswiderstand minimiert. Ein Kreiszylinder ist Körper mit zwei zueinander kongruenten und parallelen Kreisen als Grund- und Deckfläche, welche durch eine Mantelfläche verbunden sind und durch Extrusion des Kreises entlang einer Geraden gebildet werden. Liegen die Mittelpunkte der Kreisflächen des Zylinders senkrecht übereinander, so handelt es sich um einen geraden Kreiszylinder. Ein elliptischer Zylinder weißt anstelle der Kreise Ellipsen auf. Diese Ellipsen sind gleich ausgerichtet.

Es ist weiterhin vorteilhaft, wenn die ersten Tragprofile um den von der ersten Flanke eingenommenen Winkel versetzt angeordnet sind. Dadurch kann ein gleichzeitiges Hinaufgleiten bzw. Hinabgleiten an zwei oder mehr ersten Flanken gleichzeitig ermöglicht werden. Dies führt zu einer symmetrischen Verteilung der Kräfte und daher zu einem besonders effizienten und leichtgängigen Führen der ersten Tragprofile an in der ersten Schiene. Dieser Vorteil wird noch weiter begünstigt, wenn die an der Brühkammerwand angeordneten ersten Tragprofile und die an dem Brühkammerboden angeordneten ersten Tragprofile abwechselnd angeordnet sind.

In einer vorteilhaften Ausgestaltung der zweiten Führung ist es bevorzugt, dass die zweite Führung als mindestens eine in axialer Richtung ausgerichtete zweite Schiene und mindestens ein an die zweiten Schiene angepasstes zweites Tragprofil ausgebildet ist, wobei bevorzugt die zweite Schiene am Führungselement und das zweite Tragprofil am Gehäuseelement ausgebildet ist. Besonders bevorzugt ist die zweite Führung als zwei in axialer Richtung ausgerichtete zweite Schienen und zwei an die zweiten Schienen angepasste zweite Tragprofile ausgebildet. Wie an anderer Stelle beschrieben bewirken die Anpassung von Tragprofilen an Schienen und die Anordnung von mehrerer, insbesondere symmetrisch verteilter Schienen und Tragprofile, vorliegend die zweiten Schiene und das zweiten Tragprofil, eine sehr leichtgängige Ausführung, welche besonders sicher gegen eine Verkeilung ist.

In einer vorteilhaften Ausgestaltung der dritten Führung ist es bevorzugt, dass die dritte Führung als mindestens eine in axialer Richtung ausgerichtete dritte Schiene und mindestens ein an die dritte Schiene angepasstes drittes Tragprofil ausgebildet ist, wobei bevorzugt die Schiene an der Brühkammerwand und das Tragprofil am Brühkammerboden ausgebildet ist. Besonders bevorzugt ist die dritte Führung als zwei in axialer Richtung ausgerichtete dritte Schienen und zwei an die dritten Schienen angepasste dritte Tragprofile ausgebildet. Wie an anderer Stelle beschrieben bewirken die Anpassung von Tragprofilen an Schienen und die Anordnung von mehrerer, insbesondere symmetrisch verteilter Schienen und Tragprofile, vorliegend die dritte Schiene und das dritte Tragprofil, eine sehr leichtgängige Ausführung, welche besonders sicher gegen eine Verkeilung ist.

In einer vorteilhaften Ausgestaltung der vierten Führung ist es bevorzugt, dass die vierte Führung durch eine in Umfangsrichtung geschlossene, Nut-förmige vierte Schiene und mit mindestens zwei an die vierte Schiene angepasste vierte Tragprofile ausgebildet ist, wobei bevorzugt die vierte Tragprofile am Gehäuseelement und die vierte Schiene an der Brühkammerwand angeordnet sind. Die Schließung der vierten Schiene in Umfangsrichtung ermöglicht es für den Benutzer das Gehäuseelement in vollständig im Kreis zu drehen, wodurch es keine falsche und richtige Drehrichtung mehr gibt. Dies verhindert eine Fehlbedienung des Pulverhalters durch den Benutzer. Wie an anderer Stelle beschrieben bewirkt die Anpassung von Tragprofilen an die Schiene und Anordnung von mehrerer, insbesondere symmetrisch verteilten Tragprofile, vorliegend die vierte Schiene und die vierten Tragprofile, eine sehr leichtgängige Ausführung, welche besonders sicher gegen eine Verkeilung ist. In einer weitergehenden und bevorzugten Ausgestaltung des Pulverhalters umfasst das Führungselement einen ersten die Übersetzungshülse bildenden Körper und einem zweiten ringförmigen Körper, wobei die erste Führung und die zweite Führung am ersten Körper angeordnet sind, wobei die dritte Führung derart ausgestaltet ist, dass die dritte Führung zusätzlich zum Brühkammerboden und zur Brühkammerwand den zweiten Körper des Führungselements führt, und dass eine fünfte Führung zwischen dem Gehäuseelement und dem zweiten Körper ausgebildet ist, wobei die fünfte Führung als eine zweite in Umfangsrichtung geschlossene, bevorzugt kronenförmige Führungsbahn, mit abwechselnd angeordneten in axial Richtung geneigten zweiten Flanken ausgebildet ist, sodass eine Verschiebung von zweiten Körper und Gehäuseelement gleichzeitig in axialer Richtung und in Umfangsrichtung ermöglicht ist. Durch die Ausgestaltung des Führungselements durch zwei Körper ist ein weitergehendes Ineinanderschieben der einzelnen Komponenten des Pulverhalters in der Art eines Teleskopstabs ermöglicht. Dadurch wird eine noch weitergehende Bauraumreduzierung des Pulverhalters bewirkt.

Durch den zweiten Körper ist es ermöglicht die Tragprofile des Brühkammerbodens kürzer auszugestalten, da ein Teil der dritten Führung zusammen mit dem zweiten Körper durch die fünfte Führung angehoben wird. Alternativ ist es denkbar durch die Ausgestaltung des Führungselements mit dem ersten Körper und dem zweiten Körper eine dritte Axialverstellung, welche ebenfalls additiv zu den erfindungsgemäßen Axialverstellungen ist, herbeiführt. Da die in Summe zu überwindende Axialverstellung von der Höhe der Brühkammerwand bestimmt wird, können die einzelnen Axialverstellungen bei einer Dreiteilung geringer ausfallen als bei einer Zweiteilung, wodurch sich der Bauraum der beteiligten Teile, auch des Brühkammerbodens, insgesamt verringert. Auf beide Weisen kann der Bauraum des Gehäuseelements, welcher sich unterhalb der Brühkammer befindet und welcher den Brühkammerboden zumindest teilweise und das Führungselement vollständig aufnimmt, wenn sich der Brühkammerboden in der untersten Position befindet, kompakter und flacher ausgestaltet werden.

Es ist weiterhin bevorzugt, dass mindestens zwei der ersten und/oder der zweiten Flanken, bevorzugt alle ersten und/oder zweiten Flanken, dieselbe Steigung aufweisen. Grundsätzlich ist es beliebig, welche Steigung die einzelnen ersten und/oder zweiten Flanken aufweisen, haben jedoch mindestens zwei ersten und/oder zweiten Flanken dieselbe Steigung, so ist das Verhältnis des Drehwinkels der Drehbewegung des Gehäuseelements zur der Axialverstellung des Brühkammerbodens identisch, wenn der Brühkammerboden und/oder die Brühkammerwand an den ersten oder der zweite Körper an den zweiten Flanken hinauf bzw. hinab gleiten. Verschiedene Steigungen hingegen ermöglichen dem Benutzer den Brühkammerboden in axialer Richtung mit unterschiedlicher Geschwindigkeit im Verhältnis zum Drehwinkel zu verschieben. Bevorzugt weisen alle ersten Flanken eine identische erste Steigung und alle zweiten Flanken eine identische zweite Steigung auf, sodass das Verhältnis zwischen Drehwinkel des Gehäuseelements zur der Bewegung des Brühkammerbodens in axialer Richtung fest und unabhängig von Drehrichtung und Position des Brühkammerbodens ist. Dabei ist es nicht zwingend notwendig, dass die erste und die zweite Steigung identisch sind. Dadurch ist das Verhalten des Pulverhalters für den Benutzer vorhersehbar.

In einer bevorzugten Weiterbildung der Erfindung ist es denkbar, dass zwischen den ersten und/oder den zweiten Flanken ein Plateau-Abschnitt angeordnet ist, wobei der Plateau-Abschnitt in Umfangsrichtung, insbesondere senkrecht zur Axialrichtung, verläuft. Die Anordnung von Plateau-Abschnitten zwischen den ersten und/oder den zweiten Flanken bewirkt, dass eine Drehung des Gehäuseelements über eine kurze Strecke hinweg keine oder nur eine geringfügig axiale Bewegung des Brühkammerbodens verursacht. Auf diese Weise weist der Pulverhalter ein kleines Spiel in der Ausstoßposition und in der Brühposition auf. Der Benutzer muss dann zur Einstellung der Ausstoßposition und der Brühposition des Pulverhalters nicht mehr exakt den richtigen Moment abpassen, sondern der Pulverhalter weist in der Ausstoßposition und in der Brühposition eine Toleranz gegenüber der Verdrehung auf. Dies erleichtert die Handhabung.

Weiter ist es vorteilhaft, dass die erste Führung des Pulverhalters zwei bis zehn erste Flanken und/oder die fünfte Führung des Pulverhalters zwei bis zehn zweite Flanken umfasst. Besonders bevorzugt umfasst die erste und/oder die fünfte Führung eine gerade Anzahl, bevorzugt zwischen 2 und 20, besonders bevorzugt zwischen 6 und 18, erste bzw. zweite Flanken auf. Am meisten bevorzugt ist die Anzahl an ersten und an zweiten Flanken identisch. Für den Fachmann ist es dabei offensichtlich, dass die erste bzw. die fünfte Führung eine gerade Anzahl an ersten bzw. zweiten Flanken aufweisen muss, um eine abwechselnden Anordnung der Flanken und gleichzeitig die geschlossene Ausgestaltung der Führungen in Umfangsrichtung zu ermöglichen. Die Anzahl der Flanken bestimmt dabei, um wie viel Grad das Gehäuseelement gegenüber dem Brühkammerwand verdreht werden muss, um ein Wechsel aus der Brühposition in die Ausstoßposition oder von der Ausstoßposition in die Brühposition des Brühkammerbodens herbeizuführen, unter der Voraussetzung, dass die Steigung der Flanken bei allen Flanken betragsmäßig gleich ist. Hierfür wird der Gesamtumfang von 360° durch die Anzahl der Flanken geteilt. Umfasst die erste Führung beispielweise vier erste Flanken mit betragsmäßig gleicher Steigung, wird ein Positionswechsel aus der Brühposition in die Ausstoßposition oder von der Ausstoßposition in die Brühposition nach einer Drehung des Gehäuseelements um von 90° herbeigeführt.

Überdies ist es bevorzugt denkbar, dass der Pulverhalter ein Rastelement und eine Rastkontur, von denen jeweils eines am Gehäuseelement und eines an der Brühkammerwand angeordnet ist, umfasst und die Rastkontur in Umfangsrichtung so ausgerichtet und ausgebildet ist, dass bei mindestens einer vorgegebenen Stellung, bevorzugt jeweils beim Erreichen der obersten und der untersten Position des Brühkammerbodens, eine Verrastung des Gehäuseelements gegenüber der Brühkammerwand eintritt. Die Verrastung stabilisiert den Brühkammerboden in der vorgegebenen Stellung. Eine weitere Rotation des Gehäuseelements erfordert die Überwindung eines kleinen Widerstands, welcher die Verrastung löst. Hierdurch wird das Einstellen vorgegebene Stellung, bevorzugt der der Ausstoßposition und der Brühposition, deutlich erleichtert. Ein Entfernen von benutzten Getränkesubstrats, während sich der Brühkammerboden in der Ausstoßposition befindet, oder ein Einfüllen von neuen Getränkesubstrats, während der sich der Brühkammerboden in der Brühposition befindet, wird vereinfacht, da ein versehentliches Herausdrehen des Pulverhalters aus der Ausstoßposition oder aus der Brühposition verhindert wird. Eine weitere bevorzugte Stellung für die vorgegebene Stellung ist eine Halbposition und/oder eine Zwischenposition, in welcher der Brühkammerboden auf halber Höhe und/oder auf einer Zwischenhöhe zwischen der obersten und der untersten Position befindlich ist. In der Halbstellung und/oder der Zwischenposition ist es ermöglicht, falls erwünscht, lediglich die Hälfte und/oder eine Teilmenge der üblichen Getränkemenge herzustellen. Überdies ist es vorteilhaft denkbar, dass die Verrastung bei einer Vielzahl von jeweils um einen kleinen Winkel zueinander versetzen bevorzugten Stellungen eintritt. Die Verrastung dient dann als haptische Rückmeldung für den Benutzer des Pulverhalters.

In einer vorteilhaften Weiterbildung ist es denkbar, dass die Brühkammerwand mindestens einen unbeweglich gegenüber der Brühkammerwand festgelegten Griff oder mindestens eine unbeweglich gegenüber der Brühkammerwand festgelegte Griffkontur umfasst. Mittels dieses Griffs oder der Griffkontur wird eine Rotation des Gehäuseelements in Bezug auf die Brühkammerwand und damit einhergehend die erfindungsgemäße Verschiebung des Brühkammerbodens in axialer Richtung vereinfacht. Weiter kann mithilfe des Griffes oder der Griffkontur der Pulverhalter leicht und schnell aus der Getränkezubereitungsvorrichtung entnommen oder in die Getränkezubereitungsvorrichtung eingesetzt werden. Überdies wird das Lokalisieren des Pulverhalters für den Benutzer in der Getränkezubereitungsvorrichtung erleichtert. Die Ausgestaltung des Griffs ist dabei beliebig, bevorzugt ist der Griff als ein Stiel ausgestaltet. Die Griffkontur kann einstückig aus einem Teil der Brühkammerwand herausgearbeitet sein oder als eigenes Bauteil an der Brühkammerwand festgelegt sein. Eine besonders bevorzugte Ausgestaltung einer Griffkontur ist ein Flügel.

Bevorzugt ist, dass die Brühkammerwand und das Gehäuseelement jeweils ein regelmäßiges, nicht kreisförmiges Flächenprofil aufweisen, wobei das Brühkammerwand-Flächenprofil und das Gehäuseelement-Flächenprofil bei der obersten und bei der untersten Position des Brühkammerbodens deckungsgleich angeordnet sind. Dabei erstrecken sich das Brühkammerwand-Flächenprofil und das Gehäuseelement-Flächenprofil in einer Ebene senkrecht zur axialen Richtung des Pulverhalters. Über die deckungsgleiche Anordnung der Flächenprofile wird dem Benutzer eine Rückmeldung gegeben, dass die oberste Position, die Ausstoßposition, und die unterste Position, die Brühposition, eine besondere Position des Brühkammerbodens darstellen. Darüber hinaus ist es möglich, die Struktur, in welche der Pulverhalter in der Getränkezubereitungsvorrichtung platziert wird, derart auszugestalten, dass der Pulverhalter nur dann in diese Struktur eingeführt werden kann, wenn die Flächenprofile deckungsgleich angeordnet sind. Mit anderen Worten, der Pulverhalter kann nur dann in die Getränkezubereitungsvorrichtung eingesetzt werden, wenn der Brühkammerbodem in der Auswurfsposition oder in der Brühposition ist. Dies vermindert die Wahrscheinlichkeit einer Fehlbedienung der Getränkezubereitungsvorrichtung. Alternativ ist es vorteilhaft denkbar, dass die deckungsgleiche Anordnung nur bei der Brühposition des Brühkammerbodens gegeben ist. Auf diese Weise ist eine Fehlbedienung in Form des Einsetzens des Pulverhalters in einer anderen Position als der Brühposition unmöglich, wenn die Struktur zur Aufnahme des Pulverhalters entsprechend ausgestaltet ist. Unter einem regelmäßigen Flächenprofil wird eine Figur verstanden, welche durch eine Drehung um einen bestimmten Winkel in sich selbst übergeht und daher drehsymmetrisch ist. Grundsätzlich ist ein Kreis ebenfalls drehsymmetrisch, jedoch ist die angestrebte Rückmeldung mit einem Kreis nicht möglich, da ein Kreis unabhängig vom Grad der Verdrehung in sich selbst übergeht und die Flächenprofile vorliegend immer deckungsgleich angeordnet wären. Die Flächenprofile sind dann deckungsgleich angeordnet, wenn markante Strukturen der Flächenprofile aneinander ausgerichtet sind. Beispielsweise sind das Brühkammerwand-Flächenprofil und das Gehäuseelement-Flächenprofil als ein regelmäßiges Polygon ausgestaltet, wobei die Ecken des regelmäßigen Polygons die markanten Strukturen darstellten. Das Brühkammerwand-Flächenprofil und das Gehäuseelement-Flächenprofil sind damit dann deckungsgleich angeordnet, wenn die Ecken der Polygone übereinander liegen. Fertigungstechnisch und konstruktionsbedingt kann es zu Abweichungen der Flächenprofile voneinander kommen. Die genaue Ausgestaltung des Flächenprofils ist ebenfalls grundsätzlich beliebig. Der Drehwinkel, um welches das Flächenprofil gedreht werden soll, um in sich überzugehen, ist jedoch bei der entsprechenden Ausgestaltung von der Anzahl der ersten Flanken abhängig. Dies ist dem an anderer Stelle erläuterten Zusammenhang zwischen Drehwinkel des Pulverhalters und Anzahl der ersten Flanken geschuldet. Der Drehwinkel ergibt sich aus der Teilung von 360° durch die Anzahl der ersten Flanken, wenn die deckungsgleiche Anordnung in der Brühposition und Ausstoßposition herbeigeführt werden soll. Ist die deckungsgleiche Anordnung nur in der Brühposition gewünscht, so muss der Drehwinkel anschließend verdoppelt werden. Bevorzugt ist das Brühkammerwand-Flächenprofil und das Gehäuseelement-Flächenprofil ein regelmäßigen Polygon, noch mehr bevorzugt ein regelmäßiges Polygon mit abgerundeten Ecken, am meisten bevorzugt ist ein Quadrat mit abgerundeten Ecken, welches einer Ausgestaltung der ersten Führung mit vier Flanken entspricht. Weiter bevorzugt ist das Flächenprofil ein zwei gegenüberliegenden Stellen abgeflachter Kreis. Ein solcher Kreis kann beispielsweise durch einen Kreis gebildet werden, welcher durch zwei parallele Kreissehnen, welche gegenüberliegend mit gleichen Abstand zum Kreismittelpunkt liegen, geschnitten wird. Weißt die erste Führung bei dieser bevorzugten Ausgestaltung ebenfalls vier Flanken auf und sind das Brühkammerwand-Flächenprofil und das Gehäuseelement-Flächenprofil bei der Brühposition des Brühkammerbodens deckungsgleich angeordnet und weißt die Struktur zur Aufnahme des Pulverhalter in der Getränkezubereitungsvorrichtung dem Abstand der Kreissehnen entsprechend beabstandete Schienen auf, so ist eine Einführung des Pulverhalters nur möglich, wenn der Brühkammerboden in der Brühposition ist und eine Einführung in einer anderen Position ist nicht möglich.

In einer Weiterbildung ist es bevorzugt, dass das Führungselement oder der erste Körper zweiteilig ist, wobei die erste Führung, bevorzugt die erste Schiene, in axialer Richtung auf einer Seite durch ein erstes Teil und auf der anderen Seite durch ein zweites Teil begrenzt wird und die beiden Teile zueinander festgelegt sind. Durch die zweiteilige Ausgestaltung wird die Herstellung und der Zusammenbau des Pulverhalters vereinfacht. Außerdem ist es ermöglicht, den Pulverhalter beispielsweise zur Reparatur, Wartung und/oder Reinigung in seine Einzelteile zu zerlegen.

In noch einer vorteilhaften Ausführung der Erfindung ist es weiter denkbar, dass das Gehäuseelement eine zumindest teilweise strukturierte Oberfläche und/oder Außenseite aufweist. Die Strukturierung erleichtert dabei das Ergreifen und/oder Festhalten des Gehäuseelements und verleiht dem Gehäuseelement zusätzliche Stabilität. Bevorzugt ist die strukturierte Oberfläche in Umfangsrichtung geschlossen und durch voneinander beabstandete Stäbe ausgestaltet, welche sich in axialer Richtung erstrecken.

Überdies ist es wünschenswert, dass das Gehäuseelement zweiteilig und/oder als ein Hohlkörper ausgebildet ist. Bevorzugt wird der Hohlkörper durch eine radiale Beabstandung einer ersten Wand von einer zweiten Wand des Gehäuseelements gebildet, wobei die erste Wand die zur Brühkammerwand weisende Seite und die zweite Wand die Außenseite bildet. Es ist im Rahmen der Erfindung erkannt worden, dass ein Hohlkörper Wärme schlecht leitet. Daher wird die Wärme des heißen Brühfluid, welches während des Brühvorgangs durch die Brühkammer geleitet wird, nicht oder nur in geringen Maße an die Außenseite des Gehäuseelements übertragen und der Benutzer wird vor Verbrennungen und/oder Verbrühungen geschützt. Um die Schutzwirkung weiter zu steigern, ist es ebenfalls denkbar, dass der Hohlkörper mit zusätzlichen wärmedämmenden Stoffen gefüllt ist. Durch die zweiteilige Ausgestaltung wird die Herstellung und der Zusammenbau des Gehäuseelements vereinfacht. Außerdem ist es ermöglicht, das Gehäuseelement beispielsweise zur Reparatur, Wartung und/oder Reinigung in seine Einzelteile zu zerlegen.

In noch einer bevorzugten Weiterbildung der Erfindung ist es denkbar, dass das Führungselement sich in axialer Richtung unterhalb des Brühkammerbodens angeordnet ist. Im Rahmen der Erfindung ist erkannt worden, dass bei einer Anordnung des Führungselements in axialer Richtung unterhalb des Brühkammerbodens das dichtende Anliegen des Brühkammerbodens an der Brühkammerwand ermöglicht ist. Gleichzeitig kann die Brühkammerwand frei von Führungen, in denen sich Getränkesubstrat festsetzten kann, wodurch die Bildung von Keimen begünstigt wird, gehalten werden. Außerdem sollte das Führungselement vom Gehäuseelement möglichst vollständig umschlossen sein und der Pulverhalter eine möglichst kompakte Bauweise mit größtmöglicher Stabilität aufweisen. Die Anordnung des Führungselements in axialer Richtung unterhalb des Brühkammerbodens ermöglicht daher die glatte Ausgestaltung der Brühkammerwand bei gleichzeitig möglichst kompakter Bauweise.

In noch einer vorteilhaften Weiterbildung der Erfindung ist es denkbar, dass das Gehäuseelement einen über einer bodenseitigen Auslassöffnung angeordneten Aufnahmeschacht zur Aufnahme der Brühkammerwand, des Brühkammerboden und des Führungselements umfasst. Auf diese Weise können die Brühkammerwand, der Brühkammerboden und das Führungselement im Gehäuseelement integriert werden und durch dieses vor Schäden durchbeispielsweise Berührung geschützt werden. Das Getränkefluid kann durch die bodenseitige Auslassöffnung ungehindert aus dem Pulverhalter austreten.

Es wird davon ausgegangen, dass die Definitionen und Ausführungen der oben genannten Begriffe für alle in dieser Beschreibung im Folgenden beschriebene Aspekte gelten, sofern nichts anderes angegeben ist.

Erfindungsgemäß ist weiterhin eine Getränkezubereitungsvorrichtung umfassend den erfindungsgemäßen Pulverhalter vorgeschlagen.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

### Im Einzelnen zeigen:

- Fig. 1: eine Explosionszeichnung einer ersten Ausführung eines erfindungsgemäßen Pulverhalters,
- Fig. 2A bis 2C: eine Bewegungsabfolge, welche sich beim Verdrehen der ersten Ausführung eines erfindungsgemäßen Pulverhalters ergibt, und
- Fig. 3A bis 3B: eine Bewegungsabfolge, welche sich beim Verdrehen einer zweiten Ausführung eines erfindungsgemäßen Pulverhalters ergibt.

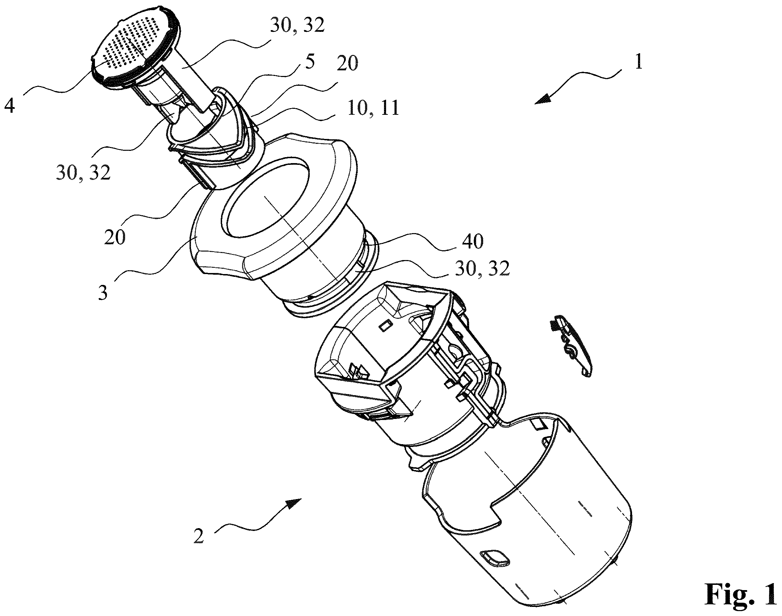

**Fig. 1** zeigt eine Explosionszeichnung eines erfindungsgemäßen Pulverhalters 1. Der Pulverhalter 1 umfasst ein Gehäuseelement 2, eine Brühkammerwand 3, einen in axialer Richtung verstellbaren Brühkammerboden 4 und ein Führungselement 5.

Das Gehäuseelement 2 ist dreiteilig ausgebildet, wobei zwei Teile die Innenseite bilden und das dritte Teil über die Innenseite gestülpt wird und die Außenseite bildet. Dadurch entsteht zwischen der Innenseite und der Außenseite des Gehäuseelements 2 ein Hohlraum, sodass das Gehäuseelement 2 ein Hohlkörper ist. Der Hohlraum wirkt isolierend, sodass die Wärme des Brühfluids nur im geringen Maße von der Innenwand der Brühkammerwand 3 über das Gehäuseelement 2 an die Außenseite des Gehäuseelements 3 dringt.

Die Brühkammerwand 3 bildet einen Hohlzylinder und ist glatt ausgestaltet. Die Brühkammerwand 3 ist an der Innenseite des Gehäuseelements 2 angeordnet.

Der Brühkammerboden 4 ist ebenfalls innerhalb des Gehäuseelements 2 und zumindest teilweise innerhalb der Brühkammerwand 3 angeordnet. Der Brühkammerboden 4 weist an seiner Oberseite Siebmittel auf. Die Brühkammerwand 3 und der Brühkammerboden 4 bilden eine Brühkammer, in welche Getränkesubstrat platziert wird.

Das Führungselement 5 ist unterhalb der Siebmittel des Brühkammerbodens 4 angeordnet. Das Führungselement 5 ist als eine Hülse ausgestaltet und dient der Übersetzung von Axialverstellungen des Brühkammerbodens 4 gegenüber der Brühkammerwand 3. Um diese Übersetzung zu ermöglichen ist zwischen dem Führungselement 5 und der Brühkammerwand 3 sowie dem Führungselement 5 und dem Brühkammerboden 4 eine erste Führung 10 ausgebildet. Die erste Führung 10 umfasst eine an der Außenseite des Führungselements 5 angeordnete erste Schiene 11, welche vier erste Flanken aufweist. In Fig. 1 sind zwei der vier ersten Flanken gut erkennbar. In der ersten Schiene 11 werden jeweils zwei, in Fig. 1 nicht gezeigte erste Tragprofile 12, welche an der Brühkammerwand 3 und dem Brühkammerboden 4 angeordnet sind, geführt.

Damit bei der ersten Ausführung die Brühkammerwand 3 und der Brühkammerboden 4 entlang den ersten Flanken der ersten Führung 10 gleiten können, ist es notwendig, dass eine Übertragung einer Rotation des Gehäuseelements 2 auf das Führungselement 5 ermöglicht ist. Gleichzeit muss zur Ermöglichung der Übersetzung das Führungselement 5 gegenüber dem Gehäuseelement 2 und, wie später ausgeführt, auch gegenüber der Brühkammerwand 3 und dem Brühkammerboden 4, in axialer Richtung verstellbar sein. Dies wird über eine zweite Führung 20 ermöglicht. Die zweite Führung weist 20 zwei in axialer Richtung ausgerichtete zweite Schienen auf, welche am Führungselement 5 angeordnet sind. In den zweiten Schienen werden zwei am Gehäuseelement 2 angeordnete Tragprofile geführt, welche in Fig. 1 nicht erkennbar sind.

Damit der Brühkammerboden 4 erfindungsgemäß gegenüber der Brühkammerwand 3 in axialer Richtung verstellbar ist, ist zwischen Brühkammerwand 3 und Brühkammerboden 4 eine dritte Führung 30 ausgeführt. Die dritte Führung 30 umfasst zwei in axialer Richtung ausgerichtete dritte Schienen 31, welche an der Unterseite der Brühkammerwand 3 angeordnet sind, wobei auf der Fig. 1 nur eine der zwei dritten Schienen 31 erkennbar ist. Der Brühkammerboden 4 weist zwei an die kurz ausgestalteten dritten Schienen 31 angepasste dritte Tragprofile 32 der dritten Führung 30 auf. Die dritten Tragprofile 32 sind dabei länglich ausgestaltet und unterhalb der Siebmittel angeordnet, um in der kurz ausgestalteten dritten Schiene 31 geführt werden zu können.

Um eine Rotation des Gehäuseelements 2 in Bezug zur Brühkammerwand 3 zu ermöglichen ist eine vierte Führung 40 zwischen dem Gehäuseelement 3 und der Brühkammerwand 4 angeordnet. Die vierte Führung 40 umfasst eine in Umfangsrichtung geschlossene vierte Schiene, welche an der Außenseite der Brühkammerwand 3 angeordnet ist und in welcher zwei, in Fig. 1 nicht gezeigte vierte Tragprofile geführt werden. Die Tragprofile sind in an der Innenseite des Gehäuseelements 2 angeordnet.

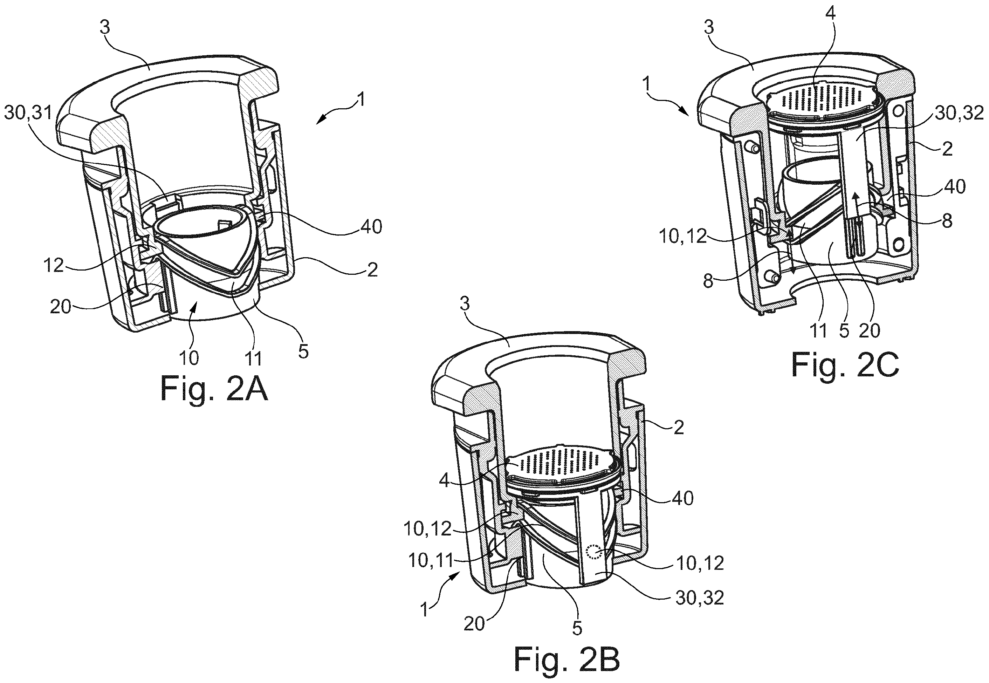

**Fig. 2A bis 2B** zeigen eine Bewegungsabfolge, welche sich beim Verdrehen der in Fig. 1 gezeigten ersten Ausführung eines erfindungsgemäßen Pulverhalters 1 ergibt. Fig. 2A zeigt die erste Ausführungsform des Pulverhalters 1 ohne den Brühkammerboden 4. Dadurch ist einer der zwei dritten Schienen 31 der dritten Führung 30 an der Innenseite der Brühkammerwand 3 gut erkennbar. Die Brühkammerwand 3 ist gegenüber dem Gehäuseelement 2 durch die vierte Führung 40 festgelegt. Dabei ist eines der zwei vierten Tragprofile, welche am Gehäuseelement 2 angeordnet sind, in der vierten Schiene, welche an der Brühkammerwand 3 angeordnet ist, zur Bildung der vierten Führung 40 in Fig. 2A abgebildet. Das Führungselement 5 weißt die erste Schiene 11 der ersten Führung 10 auf, wobei in der ersten Schiene 11 die ersten Tragprofile 12 geführt werden.

Die Fig. 2B zeigt dieselbe Situation wie die Fig. 2A, wobei der Brühkammerboden 4 in den Pulverhalter 1 eingesetzt worden ist. Der Brühkammerboden 4 weißt dabei die dritten Tragprofile 32 der dritten Führung 30 auf, welche sich an der Unterseite des Brühkammerbodens 4 erstrecken. An den dritten Tragprofilen 32 sind zwei weitere zu ersten Führung 10 gehörende erste Tragprofile 12 angeordnet, welche durch die dritten Tragprofile 32 verdeckt sind. Daher ist das erste Tragprofil 12, welches an dem in Fig. 2B sichtbaren dritten Tragprofil 32 des Brühkammerbodens 4 angeordnet ist, mit einer gepunkteten Linie angedeutet. Die an der Brühkammerwand 3 angeordneten ersten Tragprofile 12 und die an dem Brühkammerboden 4 angeordneten ersten Tragprofile 12 sind jeweils um den Winkel, der jeweils von einer der ersten Flanken der ersten Führung 10 eingenommen wird, versetzt und abwechselnd angeordnet. In der ersten Ausführung entspricht dieser Winkel 90°. In Fig. 2B ist der Brühkammerboden 4 in der untersten Position, welche auch als die Brühposition bezeichnet wird. Es ist gut erkennbar, dass sich ein Raum zwischen Brühkammerwand 2 und Brühkammerboden 3 auftut, welcher die Brühkammer bildet.

In Fig. 2C ist das Gehäuseelement 2 um 90° gegenüber der Brühkammerwand 2 und dem Brühkammerboden 3 aus Fig. 2B verdreht worden. Es ist gut erkennbar, dass das Führungselement 5 um eine Axialverstellung 8 gegenüber der Brühkammerwand 2 angehoben worden ist. Die Axialverstellung 8 wurde dadurch hervorgerufen, dass die an der Brühkammerwand 2 angeordneten ersten Tragprofile 12 an den ersten Flanken hinabgeglitten sind und sich nun an den Tiefpunkten der ersten Führung 10 befinden. Dies ist geschehen, weil die Rotation des Gehäuseelements 2 über die zweite Führung 20 auf das Führungselement 5 übertragen worden ist und sich das Führungselement 5 daher ebenfalls um 90° gegenüber der Brühkammerwand 3 verdreht hat. Gleichzeitig ist der Brühkammerboden 4 gegenüber dem Führungselement 5 ebenfalls um die Axialverstellung 8 angehoben worden. Dies ist darauf zurückzuführen, dass die an dem Brühkammerboden 4 angeordneten ersten Tragprofile 12 an den ersten Flanken der ersten Schiene 11 hinaufgeglitten sind, was ebenfalls durch die Rotation des Führungselements 5 zusammen mit Gehäuseelement 2 zurückzuführen ist. Durch die dritte Führung 30 werden Brühkammerboden 4 und Brühkammerwand 3 zueinander in Umfangsrichtung festgehalten. Beide Axialverstellungen 8, sowohl die des Führungselement 5 in Bezug auf die Brühkammerwand 3 als auch die des Brühkammerbodens 4 gegenüber dem Führungselement 5 erfolgen in dieselbe Richtung und wirken daher additiv. Der Brühkammerboden 4 wird daher in eine oberste Position gehoben, welche die Ausstoßposition ist. In dieser Position des Brühkammerbodens 4 kann benutztes Getränkesubstrat einfach und restlos entfernt werden, da der Brühkammerboden 4 plan mit der Brühkammerwand 2 abschließt.

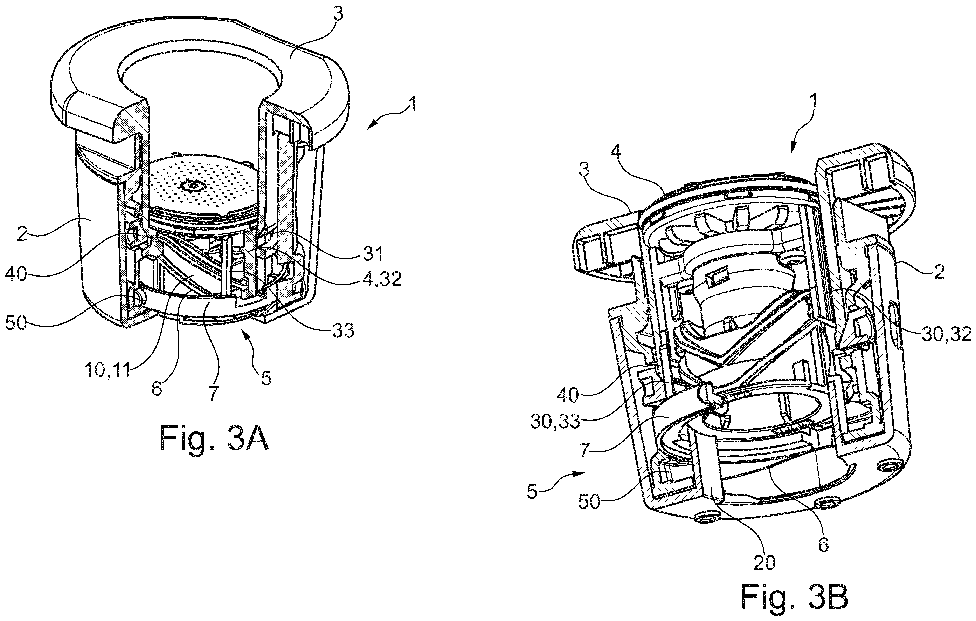

Die **Fig. 3A bis 3B** zeigen eine Bewegungsabfolge, welche sich beim Verdrehen einer zweiten Ausführung eines erfindungsgemäßen Pulverhalters 1 ergibt. Der Pulverhalter 1 umfasst ebenfalls ein Gehäuseelement 2, eine Brühkammerwand 3, ein Brühkammerboden 4 und ein Führungselement 5. Wie bei der ersten Ausführung bilden Brühkammerwand 2 und Brühkammerboden 3 eine Brühkammer. Das Führungselement 5 um fasst dabei einen ersten Körper 6, wobei der erste Körper 6 als Übersetzungshülse ausgebildet ist. Zusätzlich umfasst das Führungselement 6 einen als Ring ausgestalteten zweiten Körper 7. Der zweite Körper 7 ist in Umfangsrichtung um den ersten Körper 6 angeordnet, wobei er von diesem beabstandet ist. Am dem ersten Körper 6 ist eine erste Schiene 11 einer ersten Führung 10 ausgestaltet, wobei in der ersten Schiene 10 jeweils zwei an der Brühkammerwand 3 und am Brühkammerboden 4 angeordnete erste Tragprofile 12 geführt werden. Die erste Führung 10 der zweiten Ausführung ist ihrer Ausgestaltung und Funktion nach der ersten Führung 10 der ersten Ausführung (Fig.1 und Fig. 2A bis 2C) identisch. Eine zweite Führung 20 ist zwischen dem ersten Körper 6 und dem Gehäuseelement 2 derart angeordnet, dass eine Rotation des Gehäuseelements 2 gegenüber der Brühkammerwand 2 und dem Brühkammerboden 3 auf den ersten Körper 6 übertragen wird. Der erste Körper 6 kann sich jedoch in axialer Richtung gegenüber dem Gehäuseelement 2 verstellen.

Weiter ist zwischen Brühkammerwand 2, Brühkammerboden 3 und dem zweiten Körper 7 eine dritte Führung 30 ausgebildet. Die dritte Führung 30 legt die Brühkammerwand 3, den Brühkammerboden 4 und den zweiten Körper 7 in Umfangsrichtung zueinander fest. Eine Verschiebung der Brühkammerwand 3, des Brühkammerbodens 4 und des zweiten Körpers 7 zueinander ist in axialer Richtung jedoch weiterhin möglich. Der Brühkammerboden 4 wird dabei mittels zweier länglich ausgestalteter dritter Tragprofile 32 innerhalb zweier sowohl als Schiene als auch als Tragprofil ausgestalteter Übersetzungsprofile 33, welche am zweiten Körper 7 angeordnet sind, geführt. Die Übersetzungsprofile 33 selbst werden in einer dritten Schiene 31, welche an der Brühkammerwand 3 angeordnet sind, geführt. Im direkten Vergleich sind die dritten Tragprofile 32 bei der zweiten Ausführungsform kürzer ausgestaltet als bei der ersten Ausführungsform, wodurch der Pulverhalter 1 der zweiten Ausführungsform insgesamt flacher ausgestaltet werden kann.

Zur Ermöglichung der Rotation des Gehäuseelements 2 gegenüber der Brühkammerwand 3 ist zwischen Brühkammerwand 3 und Gehäuseelement 2 eine zur ersten Ausführung (Fig.1 und Fig. 2A bis 2C) identisch ausgestaltete vierte Führung 40 angeordnet. Zwischen dem zweiten Körper 7 und dem Gehäuseelement 2 ist eine fünfte Führung 50 ausgestaltet. Die fünfte Führung 50 umfasst eine fünfte Schiene mit in der Art der ersten Führung 10 ausgestalteten zweiten Flanken, welche am Gehäuseelement 2 angeordnet sind. In der fünften Schiene werden an dem zweiten Körper 7 angeordnete fünfte Tragprofile der fünften Führung 50 geführt. Gleiten die fünften Tragprofile durch eine Rotation des Gehäuseelements 2 gegenüber dem zweiten Körper 7 die zweiten Flanken hinauf bzw. hinab, wird der zweite Körper 7 in axialer Richtung gegenüber dem Gehäuseelement 2 verstellt.

In Fig. 3A befindet sich der Brühkammerboden 4 in der untersten Position. Wird das Gehäuseelement 2 nun um 90° gegenüber der Brühkammerwand 3 verdreht, wird die Rotation gleichzeitig auf den ersten Körper 6 über die zweite Führung 20 übertagen. Gleichzeitig werden der erste Körper 6 und der Brühkammerboden 4 in Umfangsrichtung mit der Brühkammerwand 3 durch die dritte Führung 30 festgelegt. Das heißt, der erste Körper 6 wird gegenüber der Brühkammerwand 3 und dem Brühkammerboden 4 ebenfalls verdreht. Daher gleiten die ersten Tragprofile 12 an den Flanken der ersten Schiene 11 entlang. Die Brühkammerwand 3 wird durch die vierte Führung 40 in axialer Richtung gegenüber dem Gehäuseelement 2 festgelegt, daher erfährt der ersten Körper 6 über das Gleiten der ersten Tragprofile 12 an den ersten Flanken eine nach oben gerichtete Axialverstellung gegenüber der Brühkammerwand 3. Gleichzeitig erfährt der Brühkammerboden 4 ebenfalls eine nach oben gerichtete Axialverstellung gegenüber dem ersten Körper 6, da die an dem Brühkammerboden 4 angeordneten ersten Tragprofile 12 ebenfalls entlang der ersten Flanken gleiten. Die beiden Axialverstellungen sind dabei additiv, sodass der Brühkammerboden 4 in die oberste Position gehoben wird, welche in Fig. 3B dargestellt ist. Es ist jedoch in Fig. 3B weiter erkennbar, dass aufgrund der verkürzten Ausführung der dritten Tragprofile 32 diese aus den Schienen des am zweiten Körper 7 angeordneten Übersetzungsprofil 33 springen würden, wenn der zweite Körper 7 nicht ebenfalls eine Axialverstellung erfahren würde. Die Axialverstellung des zweiten Körpers 7 wird durch die Rotation des zweiten Körpers 7 gegenüber dem Gehäuseelement hervorgerufen, welche aufgrund der dritten Führung 30 auf den zweiten Körpers 7 übertragen wird. Dabei gleiten die an dem zweiten Körper 7 angeordneten fünften Tragprofile an den zweiten Flanken der fünften Schiene entlang und verursachen auf diese Weise die notwendige Axialverstellung des zweiten Körpers 7.

### Bezugszeichenliste

- 1: Pulverhalter
- 2: Gehäuseelement
- 3: Brühkammerwand
- 4: Brühkammerboden
- 5: Führungselement
- 6: erste Körper
- 7: zweite Körper
- 8: Axialverstellung
- 10: erste Führung
- 11: erste Schiene
- 12: erstes Tragprofil
- 20: zweite Führung
- 30: dritte Führung
- 31: dritte Schiene
- 32: drittes Tragprofil
- 33: Übersetzungsprofil
- 40: vierte Führung
- 50: fünfte Führung

## Patentansprüche

1. Pulverhalter **(1)** zur lösbaren Aufnahme in einer Getränkezubereitungsvorrichtung, insbesondere eine Kaffee- oder Espressomaschine, wobei der Pulverhalter **(1)** ein Gehäuseelement **(2),** eine Brühkammerwand **(3),** ein Führungselement **(5)** und einen in einer axialen Richtung beweglich gelagerten Brühkammerboden **(4)** umfasst, wobei der Brühkammerboden **(4)** an der Brühkammerwand **(3)** dichtend anliegenden und mit Siebmitteln zum Zurückhalten eines Getränkesubstrats, insbesondere Kaffeepulver, während eines Brühvorgangs ausgebildet ist,
**dadurch gekennzeichnet,**
**dass** das Führungselement **(5)** als Übersetzungshülse ausgebildet ist und eine erste Führung **(10)** an dem Führungselement **(5)** angeordnet ist, wobei der Brühkammerboden **(4)** und die Brühkammerwand **(3)** in der ersten Führung geführt sind, und
wobei das Führungselement **(5)** und die erste Führung **(10)** so ausgeführt sind, dass eine Rotation des Gehäuseelements **(2)** gegenüber der Brühkammerwand **(3)** eine Axialverstellung **(8)** des Führungselements **(5)** gegenüber der Brühkammerwand **(3)** und eine Axialverstellung **(8)** des Brühkammerbodens **(4)** gegenüber dem Führungselement **(5)** bewirkt, so dass eine zweistufige, additive Axialverstellung **(8)** des Brühkammerbodens **(4)** gegenüber der Brühkammerwand **(3)** zwischen einer obersten und einer untersten Position erfolgt.

2. Pulverhalter nach Anspruch 1,
**dadurch gekennzeichnet,**
**dass** die erste Führung **(10)** durch eine in Umfangsrichtung geschlossene, bevorzugt kronenförmige erste Führungsbahn, mit abwechselnd angeordneten in axial Richtung geneigten erste Flanken ausgebildet ist, sodass eine Verschiebung von Führungselement **(5)** und Brühkammerboden **(4)** und von Führungselement **(5)** und Brühkammerwand **(3)** gleichzeitig in axialer Richtung und in Umfangsrichtung ermöglicht ist,
**dass** eine zweite Führung **(20)** zwischen Gehäuseelement **(2)** und Führungselement **(5)** ausgebildet ist, wobei die zweite Führung **(20)** derart ausgebildet ist, dass eine Verschiebung von Gehäuseelement **(2)** und Führungselement **(5)** in axialer Richtung ermöglicht ist, dass eine dritte Führung **(30)** zwischen Brühkammerboden **(4)** und Brühkammerwand **(3),** wobei die dritte Führung **(30)** derart ausgebildet ist, dass eine Verschiebung von Brühkammerwand **(3)** und Brühkammerboden **(4)** oder eine Verschiebung von Führungselement **(5)** und Brühkammerboden **(4)** in axialer Richtung ermöglicht ist, und/oder
**dass** eine vierte Führung **(40)** zwischen Gehäuseelement **(2)** und Brühkammerwand **(3)** ausgebildet ist, wobei die vierte Führung **(40)** derart ausgebildet ist, dass die Rotation des Gehäuseelements **(2),** insbesondere die Rotation zwischen Gehäuseelement **(2)** und Brühkammerwand **(3),** in Umfangsrichtung ermöglicht ist.

3. Pulverhalter nach Anspruch 2,
**dadurch gekennzeichnet,**
**dass** die erste Führung **(10)** als eine an die erste Führungsbahn angepasste erste Schiene **(11)** und mindestens vier an die erste Schiene **(11)** angepasste erste Tragprofile **(12)** ausgebildet ist, wobei bevorzugt die erste Schiene **(11)** am Führungselement **(5)** und jeweils zwei der vier ersten Tragprofile **(12)** am Brühkammerboden **(4)** und jeweils zwei der vier ersten Tragprofile **(12)** an der Brühkammerwand **(3)** angeordnet sind.

4. Pulverhalter nach Anspruch 3,
**dadurch gekennzeichnet,**
**dass** das erste Tragprofil **(12)** ein Kreiszylinder oder ein elliptischer Zylinder ist.

5. Pulverhalter nach Anspruch 3 oder 4,
**dadurch gekennzeichnet,**
**dass** die ersten Tragprofile **(12)** um den von einer Flanke eingenommenen Winkel versetzt angeordnet sind.

6. Pulverhalter nach einem der Ansprüche 2 bis 5,
**dadurch gekennzeichnet,**
**dass** die zweite Führung **(20)** als mindestens eine in axialer Richtung ausgerichtete zweite Schiene und mindestens ein an die zweite Schiene angepasstes zweites Tragprofil ausgebildet ist, wobei bevorzugt die zweite Schiene am Führungselement **(5)** und das zweite Tragprofil am Gehäuseelement **(2)** ausgebildet ist.

7. Pulverhalter nach einem der Ansprüche 2 bis 6,
**dadurch gekennzeichnet,**
**dass** die dritte Führung **(30)** als mindestens eine in axialer Richtung ausgerichtete dritte Schiene **(31)** und mindestens ein an die dritte Schiene **(31)** angepasstes drittes Tragprofil **(32)** ausgebildet ist, wobei bevorzugt die dritte Schiene **(31)** an der Brühkammerwand **(3)** und das dritte Tragprofil **(32)** am Brühkammerboden **(4)** ausgebildet ist.

8. Pulverhalter nach einem der Ansprüche 2 bis 7,
**dadurch gekennzeichnet,**
**dass** die vierte Führung **(40)** durch eine in Umfangsrichtung geschlossene, Nut-förmige vierte Schiene und mit mindestens zwei an die vierte Schiene angepasste vierte Tragprofile ausgebildet ist, wobei bevorzugt die vierte Tragprofile am Gehäuseelement **(2)** und die vierte Schiene an der Brühkammerwand **(3)** angeordnet sind.

9. Pulverhalter nach einem der vorangegangen Ansprüche 2 bis 8, **dadurch gekennzeichnet,**
**dass** das Führungselement **(5)** einen ersten die Übersetzungshülse bildenden Körper **(6)** und einem zweiten ringförmigen Körper **(7)** umfasst,
wobei die erste Führung **(10)** und die zweite Führung **(20)** am ersten Körper **(6)** angeordnet sind,
wobei die dritte Führung **(30)** derart ausgestaltet ist, dass die dritte Führung **(30)** zusätzlich zum Brühkammerboden **(4)** und zur Brühkammerwand **(3)** den zweiten Körper **(7)** des Führungselements **(5)** führt, und
**dass** eine fünfte Führung **(50)** zwischen dem Gehäuseelement **(2)** und dem zweiten Körper **(7)** ausgebildet ist, wobei die fünfte Führung **(50)** als eine zweite in Umfangsrichtung geschlossene, bevorzugt kronenförmige Führungsbahn, mit abwechselnd angeordneten in axial Richtung geneigten zweiten Flanken ausgebildet ist, sodass eine Verschiebung von zweiten Körper **(7)** und Gehäuseelement **(2)** gleichzeitig in axialer Richtung und in Umfangsrichtung ermöglicht ist.

10. Pulverhalter nach einem der Ansprüche 2 bis 9,
**dadurch gekennzeichnet,**
**dass** mindestens zwei der ersten und/oder der zweiten Flanken, bevorzugt alle ersten und/oder zweiten Flanken, dieselbe Steigung aufweisen.

11. Pulverhalter nach einem der Ansprüche 2 bis 10,
**dadurch gekennzeichnet,**
**dass** zwischen den ersten und/oder den zweiten Flanken ein Plateau-Abschnitt angeordnet ist, wobei der Plateau-Abschnitt in Umfangsrichtung, insbesondere senkrecht zur axialen Richtung, verläuft.

12. Pulverhalter nach einem der vorangegangenen Ansprüche 2 bis 11,
**dadurch gekennzeichnet,**
**dass** die erste Führung **(10)** und/oder die fünfte Führung **(50)** zwei bis zehn Flanken umfassen.

13. Pulverhalter nach einem der vorangegangenen Ansprüchen,
**gekennzeichnet durch**
ein Rastelement und eine Rastkontur, von denen jeweils eines am Gehäuseelement **(2)** und eines an der Brühkammerwand **(3)** angeordnet ist und die Rastkontur in Umfangsordnung so ausgerichtet und ausgebildet ist, dass bei mindestens einer vorgegebenen Stellung, bevorzugt jeweils beim Erreichen der obersten und der untersten Position des Brühkammerbodens **(4),** eine Verrastung des Gehäuseelements **(2)** gegenüber der Brühkammerwand **(3)** eintritt.

14. Pulverhalter nach einem der vorangegangenen Ansprüchen,
**dadurch gekennzeichnet,**
**dass** die Brühkammerwand **(3)** mindestens einen unbeweglich gegenüber der Brühkammerwand **(3)** festgelegten Griff oder mindestens eine unbeweglich gegenüber der Brühkammerwand **(3)** festgelegte Griffkontur umfasst.

15. Pulverhalter nach einem der vorangegangenen Ansprüchen,
**dadurch gekennzeichnet,**
**dass** die Brühkammerwand **(3)** und das Gehäuseelement **(2)** jeweils ein regelmäßiges, nicht kreisförmiges Flächenprofil aufweisen, wobei das Brühkammerwand-Flächenprofil und das Gehäuseelement-Flächenprofil bei der obersten und bei der untersten Position des Brühkammerbodens **(4)** deckungsgleich angeordnet sind.

16. Pulverhalter nach Anspruch 15,
**dadurch gekennzeichnet,**
**dass** die Flächenprofile ein abgerundetes Quadrat oder ein an zwei gegenüberliegenden Stellen abgeflachter Kreis ist.

17. Pulverhalter nach einem der vorangegangenen Ansprüchen,
**dadurch gekennzeichnet,**
**dass** das Führungselement **(5)** oder der erste Körper **(6)** zweiteilig ist, wobei die erste Führung **(10),** bevorzugt die erste Schiene **(11),** in axialer Richtung auf einer Seite durch ein erstes Teil und auf der anderen Seite durch ein zweites Teil begrenzt wird und die beiden Teile zueinander festgelegt sind.

18. Pulverhalter nach einem der vorangegangenen Ansprüchen,
**dadurch gekennzeichnet,**
**dass** das Gehäuseelement **(2)** eine zumindest teilweise strukturierte Oberfläche und/oder Außenseite aufweist.

19. Pulverhalter nach einem der vorangegangenen Ansprüchen,
**dadurch gekennzeichnet,**
**dass** das Gehäuseelement **(2)** mehrteilig und/oder als ein Hohlkörper ausgebildet ist

20. Pulverhalter nach einem der vorangegangenen Ansprüchen,
**dadurch gekennzeichnet,**
**dass** das Führungselement **(5)** in axialer Richtung unterhalb des Brühkammerbodens **(4)** angeordnet ist.

21. Pulverhalter nach einem der vorangegangenen Ansprüchen,
**dadurch gekennzeichnet,**
**dass** das Gehäuseelement **(2)** einen über einer bodenseitigen Auslassöffnung angeordneten Aufnahmeschacht zur Aufnahme der Brühkammerwand **(3),** des Brühkammerboden **(4)** und des Führungselements **(5)** umfasst.

22. Getränkezubereitungsvorrichtung umfassend einen Pulverhalter **(1)** nach einem der Ansprüche 1 bis 21.

## Claims

1. A powder holder **(1)** to be removably received in a beverage preparation device, in particular a coffee or espresso maker, wherein the powder holder **(1)** comprises a housing element **(2),** a brewing chamber wall **(3),** a guide element **(5)** and a brewing chamber bottom **(4)** movably mounted in the axial direction, wherein the brewing chamber bottom **(4)** is in sealing contact with the brewing chamber wall **(3)** and is formed with filter means for retaining a beverage substrate, in particular ground coffee, during a brewing process,
**characterized in that**
the guide element **(5)** is formed as a conversion sleeve and a first guide **(10)** is arranged on the guide element **(5),** wherein the brewing chamber bottom **(4)** and the brewing chamber wall **(3)** are guided in the first guide and
wherein the guide element **(5)** and the first guide **(10)** are designed such that a rotation of the housing element **(2)** in relation to the brewing chamber wall **(3)** causes axial displacement **(8)** of the guide element **(5)** in relation to the brewing chamber wall **(3)** and axial displacement **(8)** of the brewing chamber bottom **(4)** in relation to the guide element **(5),** so that two-stage additive axial displacement **(8)** of the brewing chamber bottom **(4)** in relation to the brewing chamber wall **(3)** takes place between a top position and a bottom position.

2. The powder holder according to claim 1,
**characterized in that**
the first guide **(10)** is formed by a first guide track that is closed in the circumferential direction and preferably crown-shaped, with alternately arranged first flanks inclined in the axial direction, so that displacement of the guide element **(5)** and the brewing chamber bottom **(4)** and of the guide element **(5)** and the brewing chamber wall **(3)** is allowed simultaneously in the axial direction and in the circumferential direction;
a second guide **(20)** is formed between the housing element **(2)** and the guide element **(5),** wherein the second guide **(20)** is formed to allow displacement of the housing element **(2)** and the guide element **(5)** in the axial direction,
a third guide **(30)** is formed between the brewing chamber bottom **(4)** and the brewing chamber wall **(3),** wherein the third guide **(30)** is formed to allow displacement of the brewing chamber wall **(3)** and the brewing chamber bottom **(4)** or displacement of the guide element **(5)** and the brewing chamber bottom **(4)** in the axial direction and/or
a fourth guide **(40)** is formed between the housing element **(2)** and the brewing chamber wall **(3),** wherein the fourth guide **(40)** is formed to allow the rotation of the housing element **(2),** in particular the rotation between the housing element **(2)** and the brewing chamber wall **(3),** in the circumferential direction.

3. The powder holder according to claim 2,
**characterized in that**
the first guide **(10)** is formed as a first rail **(11)** adapted to the first guide track and at least four first support profiles **(12)** adapted to the first rail **(11),** wherein preferably the first rail **(11)** is arranged on the guide element **(5)** and two of the four first support profiles **(12)** are each arranged on the brewing chamber bottom **(4)** and two of the four first support profiles **(12)** are each arranged on the brewing chamber wall **(3).**

4. The powder holder according to claim 3,
**characterized in that**
the first support profile **(12)** is a circular cylinder or an elliptical cylinder.

5. The powder holder according to claims 3 or 4,
**characterized in that**
the first support profiles **(12)** are arranged such that they are offset by the angle of one flank.

6. The powder holder according to any one of claims 2 to 5,
**characterized in that**
the second guide **(20)** is designed as at least one second rail oriented in the axial direction and at least one second support profile adapted to the second rail, wherein preferably the second rail is formed on the guide element **(5)** and the second support profile is formed on the housing element **(2).**

7. The powder holder according to any one of claims 2 to 6,
**characterized in that**
the third guide **(30)** is designed as at least one third rail **(31)** oriented in the axial direction and at least one third support profile **(32)** adapted to the third rail **(31),** wherein preferably the third rail **(31)** is formed on the brewing chamber wall **(3)** and the third support profile **(32)** is formed on the brewing chamber bottom **(4).**

8. The powder holder according to any one of claims 2 to 7,
**characterized in that**
the fourth guide **(40)** is formed by a groove-shaped fourth rail that is closed in the circumferential direction and with at least two fourth support profiles adapted to the fourth rail, wherein preferably the fourth support profiles are arranged on the housing element **(2)** and the fourth rail is arranged on the brewing chamber wall **(3).**

9. The powder holder according to any one of preceding claims 2 to 8, **characterized in that**
the guide element **(5)** comprises a first body **(6)** forming the conversion sleeve and a second annular body **(7),**
wherein the first guide **(10)** and the second guide **(20)** are arranged on the first body **(6),**
wherein the third guide **(30)** is designed in such a way that the third guide **(30)** guides the second body **(7)** of the guide element **(5)** in addition to the brewing chamber bottom **(4)** and the brewing chamber wall **(3)** and
a fifth guide **(50)** is formed between the housing element **(2)** and the second body **(7),** wherein the fifth guide **(50)** is formed as a second preferably crown-shaped guide track that is closed in the circumferential direction, with alternately arranged second flanks inclined in the axial direction, to allow displacement of the second body **(7)** and housing element **(2)** simultaneously in the axial direction and in the circumferential direction.

10. The powder holder according to any one of claims 2 to 9,
**characterized in that**
at least two of the first and/or second flanks, preferably all of the first and/or second flanks, have the same pitch.

11. The powder holder according to any one of claims 2 to 10,
**characterized in that**
a plateau section is arranged between the first and/or second flanks, wherein the plateau section extends in the circumferential direction, in particular perpendicular to the axial direction.

12. The powder holder according to any one of preceding claims 2 to 11,
**characterized in that**
the first guide **(10)** and/or the fifth guide **(50)** comprise(s) two to ten flanks.

13. The powder holder according to any one of the preceding claims,
**characterized by**
a locking element and a locking contour, one of which is arranged on the housing element **(2)** and one on the brewing chamber wall **(3)** and the locking contour is oriented and formed in the circumferential order such that the housing element **(2)** locks in relation in relation to the brewing chamber wall **(3)** in at least one specified position, preferably when the top and bottom positions of the brewing chamber bottom **(4)** are reached.

14. The powder holder according to any one of the preceding claims,
**characterized in that**
the brewing chamber wall **(3)** comprises at least one handle fixedly secured to be immovable in relation to the brewing chamber wall **(3)** or at least one handle contour fixedly secured to be immovable in relation to the brewing chamber wall **(3).**

15. The powder holder according to any one of the preceding claims,
**characterized in that**
the brewing chamber wall **(3)** and the housing element **(2)** each have a regular, non-circular surface profile, wherein the brewing-chamber-wall surface profile and the housing-element surface profile are congruent in the top and bottom positions of the brewing chamber bottom **(4).**

16. The powder holder according to claim 15,
**characterized in that**
the surface profile is a rounded square or a circle flattened at two opposite points.

17. The powder holder according to any one of the preceding claims,
**characterized in that**
the guide element **(5)** or the first body **(6)** has two parts, wherein the first guide **(10),** preferably the first rail **(11),** is bounded in the axial direction by a first part on one side and by a second part on the other side and the two parts are fixedly secured in relation to each other.

18. The powder holder according to any one of the preceding claims,
**characterized in that**
the housing element **(2)** has an at least partially structured surface and/or outside.

19. The powder holder according to any one of the preceding claims,
**characterized in that**
the housing element **(2)** is formed with multiple parts and/or as a hollow body

20. The powder holder according to any one of the preceding claims,
**characterized in that**
the guide element **(5)** is arranged below the brewing chamber bottom **(4)** in the axial direction.

21. The powder holder according to any one of the preceding claims,
**characterized in that**
the housing element **(2)** comprises a receiving shaft that is arranged above an outlet opening at the bottom end and serves to receive the brewing chamber wall **(3),** the brewing chamber bottom **(4)** and the guide element **(5).**

22. A beverage preparation device comprising a powder holder **(1)** according to any one of claims 1 to 21.

## Revendications

1. Porte-poudre **(1)** pour être reçu de manière amovible dans un dispositif de préparation de boissons, notamment une machine à café ou à expresso, le porte-poudre **(1)** comprenant un élément de boîtier **(2),** une paroi **(3)** de chambre d'infusion, un élément de guidage **(5)** et un fond **(4)** de chambre d'infusion monté de manière mobile dans une direction axiale, le fond **(4)** de chambre d'infusion étant en contact étanche avec la paroi **(3)** de chambre d'infusion et étant réalisé avec des moyens de tamis pour retenir un substrat de boisson, notamment de la poudre de café, pendant un processus d'infusion,
**caractérisé en ce que**
l'élément de guidage **(5)** est réalisé comme manchon de transmission et un premier guidage **(10)** est disposé sur l'élément de guidage **(5),** le fond **(4)** de chambre d'infusion et la paroi **(5)** de chambre d'infusion étant guidés dans le premier guidage, et
l'élément de guidage **(5)** et le premier guidage **(10)** étant conçus de manière qu'une rotation de l'élément de boîtier **(2)** par rapport à la paroi **(3)** de chambre d'infusion provoque un déplacement axial **(8)** de l'élément de guidage **(5)** par rapport à la paroi **(3)** de chambre d'infusion et un déplacement axial **(8)** du fond **(4)** de chambre d'infusion par rapport à l'élément de guidage **(5)** de manière que s'effectue un déplacement axial **(8)** additif en deux étapes du fond **(4)** de chambre d'infusion par rapport à la paroi **(3)** de chambre d'infusion entre une position la plus haute et une position la plus basse.

2. Porte-poudre selon la revendication 1,
**caractérisé en ce**
**que** le premier guidage **(10)** est réalisé par une première voie de guidage, qui est de préférence en forme de couronne et qui est fermée dans une direction circonférentielle, avec des premiers flancs disposés en alternance et inclinés dans une direction axiale de sorte qu'un déplacement de l'élément de guidage **(5)** et du fond **(4)** de chambre d'infusion et de l'élément de guidage **(5)** et de la paroi **(3)** de chambre d'infusion est rendu possible simultanément dans la direction axiale et dans la direction circonférentielle ;
**qu'**un deuxième guidage **(20)** est réalisé entre l'élément de boîtier **(2)** et l'élément de guidage **(5),** le deuxième guidage **(20)** étant réalisé de manière qu'un déplacement de l'élément de boîtier **(2)** et de l'élément de guidage **(5)** dans la direction axiale est rendu possible,
**qu'**un troisième guidage **(30)** est réalisé entre le fond **(4)** de chambre d'infusion et la paroi **(3)** de chambre d'infusion, le troisième guidage **(30)** étant réalisé de manière qu'un déplacement de la paroi **(3)** de chambre d'infusion et du fond **(4)** de chambre d'infusion ou un déplacement de l'élément de guidage **(5)** et du fond **(4)** de chambre d'infusion dans la direction axiale est rendu possible, et/ou
**qu'**un quatrième guidage **(40)** est réalisé entre l'élément de boîtier **(2)** et la paroi **(3)** de chambre d'infusion, le quatrième guidage **(40)** étant réalisé de manière que la rotation de l'élément de boîtier **(2),** notamment la rotation entre l'élément de guidage **(5)** et la paroi **(3)** de chambre d'infusion, dans la direction circonférentielle est rendu possible.

3. Porte-poudre selon la revendication 2,
**caractérisé en ce que**
le premier guidage **(10)** est réalisé comme premier rail **(11)** ajusté à la première voie de guidage et au moins quatre premiers profilés de support **(12)** ajustés au premier rail **(11),** de préférence, le premier rail **(11)** étant disposé sur l'élément de guidage **(5)** et deux des quatre premiers profilés de support **(12)** étant chacun disposé sur le fond **(4)** de chambre d'infusion et deux des quatre premiers profilés de support **(12)** étant chacun disposé sur la paroi **(3)** de chambre d'infusion.

4. Porte-poudre selon la revendication 3,
**caractérisé en ce que**
le premier profilé de support **(12)** est un cylindre circulaire ou un cylindre elliptique.

5. Porte-poudre selon la revendication 3 ou 4,
**caractérisé en ce que**
les premiers profilés de support **(12)** sont disposés de manière décalée d'un angle d'un flanc.

6. Porte-poudre selon l'une quelconque des revendications 2 à 5,
**caractérisé en ce que**
le deuxième guidage **(20)** est réalisé comme au moins un deuxième rail orienté dans la direction axiale et au moins un deuxième profilé de support ajusté au deuxième rail, de préférence, le deuxième rail étant réalisé sur l'élément de guidage **(5)** et le deuxième profilé de support étant réalisé sur l'élément de boîtier **(2).**

7. Porte-poudre selon l'une quelconque des revendications 2 à 6,
**caractérisé en ce que**
le troisième guidage **(30)** est réalisé comme au moins un troisième rail **(31)** orienté dans la direction axiale et au moins un troisième profilé de support **(32)** ajusté au troisième rail **(31),** de préférence, le troisième rail **(31)** étant réalisé sur la paroi **(3)** de chambre d'infusion et le troisième profilé de support **(32)** étant réalisé sur le fond **(4)** de chambre d'infusion.

8. Porte-poudre selon l'une quelconque des revendications 2 à 7,
**caractérisé en ce que**
le quatrième guidage **(40)** est réalisé par un quatrième rail en forme de rainure et fermé dans la direction circonférentielle et avec au moins deux quatrièmes profilés de support ajustés au quatrième rail, de préférence, les quatrièmes rails étant disposés sur l'élément de boîtier **(2)** et le quatrième rail étant disposé sur la paroi **(3)** de chambre d'infusion.

9. Porte-poudre selon l'une quelconque des revendications 2 à 8,
**caractérisé en ce**
**que** l'élément de guidage **(5)** comprend un premier corps **(6)** réalisant le manchon de transmission et un deuxième corps **(7)** annulaire,
le premier guidage **(10)** et le deuxième guidage **(20)** étant disposés sur le premier corps **(6),**
le troisième guidage **(30)** étant conçu de manière que le troisième guidage **(30)** guide le deuxième corps **(7)** de l'élément de guidage **(5)** en plus du fond **(4)** de chambre d'infusion et de la paroi **(3)** de chambre d'infusion, et
**qu'**un cinquième guidage **(50)** est réalisé entre l'élément de boîtier **(2)** et le deuxième corps **(7),** le cinquième guidage **(50)** est réalisé comme deuxième voie de guidage, qui est de préférence en forme de couronne et qui est fermée dans une direction circonférentielle, avec des deuxièmes flancs disposés en alternance et inclinés dans une direction axiale de sorte qu'un déplacement du deuxième corps **(7)** et de l'élément de boîtier **(2)** est rendu possible simultanément dans la direction axiale et dans la direction circonférentielle.

10. Porte-poudre selon l'une quelconque des revendications 2 à 9,
**caractérisé en ce**
**qu'**au moins deux des premiers et/ou des deuxièmes flancs, de préférence tous les premiers et/ou les deuxièmes flancs, ont la même pente.

11. Porte-poudre selon l'une quelconque des revendications 2 à 10,
**caractérisé en ce**
**qu'**une partie de plateau est disposée entre les premiers et/ou les deuxièmes flancs, la partie de plateau s'étendant en particulier perpendiculairement par rapport à la direction axiale.

12. Porte-poudre selon l'une quelconque des revendications 2 à 11,
**caractérisé en ce que**
le premier guidage **(10)** et/ou le cinquième guidage **(50)** comprennent deux à dix flancs.

13. Porte-poudre selon l'une quelconque des revendications précédentes,
**caractérisé par**
un élément de verrouillage et un contour de verrouillage dont un est disposé sur l'élément de boîtier **(2)** et un est disposé sur la paroi **(3)** de chambre d'infusion et le contour de verrouillage est réalisé et orienté de manière qu'un verrouillage de l'élément de boîtier **(2)** se produit par rapport à la paroi **(3)** de chambre d'infusion dans au moins une position prédéterminée, de préférence lorsque la position la plus haute et la position la plus basse du fond **(4)** de chambre d'infusion sont atteintes.

14. Porte-poudre selon l'une quelconque des revendications précédentes,
**caractérisé en ce que**
la paroi **(3)** de chambre d'infusion comprend au moins une poignée fixée de manière immobile par rapport à la paroi **(3)** de chambre d'infusion ou au moins un contour de poignée fixé de manière immobile par rapport à la paroi **(3)** de chambre d'infusion.

15. Porte-poudre selon l'une quelconque des revendications précédentes,
**caractérisé en ce que**
la paroi **(3)** de chambre d'infusion et l'élément de boîtier **(2)** ont chacun un profil de surface régulier et non circulaire, le profil de surface de la paroi de chambre d'infusion et le profil de surface de l'élément de boîtier étant disposés de manière congruente dans la position la plus haute et la position la plus basse du fond **(4)** de chambre d'infusion.

16. Porte-poudre selon la revendication 15,
**caractérisé en ce que**
le profil de surface est un carré arrondi ou un cercle aplati à deux endroits opposés.

17. Porte-poudre selon l'une quelconque des revendications précédentes,
**caractérisé en ce que**
l'élément de guidage **(5)** ou le premier corps **(6)** est composé de deux parties, le premier guidage **(10),** de préférence le premier rail **(11),** étant délimité dans la direction axiale d'un côté par une première partie et de l'autre côté par une deuxième partie et les deux parties étant fixées l'une par rapport à l'autre.

18. Porte-poudre selon l'une quelconque des revendications précédentes,
**caractérisé en ce que**
l'élément de boîtier **(2)** a une surface et/ou un côté extérieur qui sont au moins partiellement structurés.

19. Porte-poudre selon l'une quelconque des revendications précédentes,
**caractérisé en ce que**
l'élément de boîtier **(2)** est réalisé en plusieurs parties et/ou comme corps creux.

20. Porte-poudre selon l'une quelconque des revendications précédentes,
**caractérisé en ce que**
l'élément de guidage **(5)** est disposé dans la direction axiale au-dessous du fond **(4)** de chambre d'infusion.

21. Porte-poudre selon l'une quelconque des revendications précédentes,
**caractérisé en ce que**
l'élément de boîtier **(2)** comprend un puits de réception disposé au-dessus d'une ouverture de sortie du côté de fond et servant à recevoir la paroi **(3)** de chambre d'infusion, le fond **(4)** de chambre d'infusion et l'élément de guidage **(5)**.

22. Dispositif de préparation de boissons comprenant un porte-poudre **(1)** selon l'une quelconque des revendications 1 à 21.
